(19) Europäisches Patentamt / European Patent Office / Office européen des brevets

(11) **EP 4 478 823 A1**

(12) **EUROPEAN PATENT APPLICATION**
published in accordance with Art. 153(4) EPC

(43) Date of publication:
**18.12.2024 Bulletin 2024/51**

(21) Application number: **22925409.9**

(22) Date of filing: **11.02.2022**

(51) International Patent Classification (IPC):
**H04W 74/08** (2024.01)

(52) Cooperative Patent Classification (CPC):
**H04W 74/08**

(86) International application number:
**PCT/CN2022/076106**

(87) International publication number:
**WO 2023/151047 (17.08.2023 Gazette 2023/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Beijing Xiaomi Mobile Software Co., Ltd.**
**Beijing 100085 (CN)**

(72) Inventor: **QIAO, Xuemei**
**Beijing 100085 (CN)**

(74) Representative: **Stöckeler, Ferdinand et al**
**Schoppe, Zimmermann, Stöckeler**
**Zinkler, Schenk & Partner mbB**
**Patentanwälte**
**Radlkoferstrasse 2**
**81373 München (DE)**

(54) **TERMINAL DEVICE SCHEDULING METHOD AND APPARATUS THEREOF**

(57) Embodiments of the present application provide a terminal device scheduling method and apparatus thereof, and can be applied to the technical field of communications. The method executed by a terminal device comprises: determining a source for sending a random access message according to physical layer channel/signal processing capability of the terminal device; and sending a random access message to a network device by using the resource, wherein the random access message sent by using the resource is used for instructing the network device to determine a random access message processing delay of the terminal device according to the resource corresponding to the random access message, the random access message processing delay being used for scheduling transmission of subsequent random access messages of the terminal device. In this way, the network device can allocate different resource scheduling processing for subsequent random access messages according to the terminal devices with different processing capabilities, such that the terminal device can normally send messages by scheduling reasonably allocated resources, re-scheduling of resources when message sending fails is avoided, resource waste is avoided, and the resource utilization rate is improved.

determine a resource used for sending a random access message based on a physical layer channel/signal processing capability of the terminal device — S201

use the resource to send the random access message to the network device, the random access message sent through the resource is used for instructing the network device to determine the random access message processing time delay for the terminal device based on the resource corresponding to the random access message, the random access message processing time delay for the terminal device is used for scheduling a transmission of a subsequent random access message of the terminal device — S202

**FIG. 2**

**Description**

**TECHNICAL FIELD**

The disclosure relates to the field of communications technology, and in particular to terminal device scheduling methods and apparatus.

**BACKGROUND**

In related arts, when a serving cell (SC) allows a terminal device with a relaxed processing capability to access, if the network device still schedules, based on an unrelaxed processing capability, all terminal devices (including the terminal device with the relax processing capability) that access the serving cell, the terminal device with the relaxed processing capability has no enough time to perform Physical Downlink Shared Channel (PDSCH) or Physical Uplink Shared Channel (PUSCH) processing or preparation, resulting in that a random access message of the terminal device with the relaxed processing capability is difficult to send normally.

**SUMMARY**

Embodiments of the disclosure provide terminal device scheduling methods and apparatuses, which may be applied to the field of communications technology. Resource(s) corresponding to the random access message may be determined based on the processing capability of the terminal device, so that the network device may determine a random access processing time delay based on the resources to schedule the terminal device, thereby preventing that a reduced-capability terminal device with a relaxed processing capability cannot process or prepare for Physical Downlink Shared Channel (PDSCH) or Physical Uplink Shared Channel (PUSCH) in time and achieving the normal sending of the random access message, which is conducive to saving resources and avoiding waste of resources.

In a first aspect, embodiments of the disclosure provide a terminal device scheduling method. The method is performed by the terminal device. The method includes: determining a resource corresponding to a random access message based on a physical layer channel/signal processing capability of the terminal device; using the resource to send the random access message to a network device, to enable the network device to determine a random access message processing time delay for the terminal device based on the resource corresponding to the random access message and to schedule a transmission of a subsequent random access message of the terminal device.

In an implementation, a physical layer channel/signal includes one or more of: a Physical Random Access Channel (PRACH), a Physical Uplink Shared Channel (PUSCH), a Physical Downlink Shared Channel (PDSCH), a Physical Uplink Control Channel (PUCCH), a Physical Downlink Control Channel (PDCCH), a Channel State Information Reference Signal (CSI-RS), a Channel Sounding Reference Signal (SRS), a Phase Tracking Reference Signal (PTRS), or a Tracking Reference Signal (TRS).

In an implementation, the method further includes: receiving a configuration or indication information sent by the network device; in which the configuration or indication information is used for configuring or indicating candidate resource groups corresponding to at least two types of physical layer channel/signal processing capabilities of terminal devices.

In an implementation, the physical layer channel/signal processing capabilities of different terminal devices correspond to different candidate resource groups.

In an implementation, determining the resource corresponding to the random access message based on the physical layer channel/signal processing capability of the terminal device includes: in response to the terminal device being an evolved reduced capability terminal device or in response to the physical layer channel/signal processing capability of the terminal device being a relaxed processing capability, determining the candidate resource group of the terminal device based on a mapping relationship between candidate resource groups and the physical layer channel/-signal processing capabilities of the terminal devices; and determining the resource for transmitting the random access message from the candidate resource group of the terminal device.

In an implementation, the random access message is a first random access message.

In an implementation, the random access message is a third random access message, and the mapping relationship between the candidate resource groups and the physical layer channel/signal processing capabilities of the terminal devices is determined based on first time intervals corresponding to at least two types of physical layer channel/signal processing capabilities, in which the first time interval is a time interval between a time when a last symbol of a second random access message is received by the terminal device and a time when a first symbol of the third random access message is sent.

In an implementation, the configuration or indication information carries the first time intervals corresponding to the at least two types of physical layer channel/signal processing capabilities or carries indexes of the first time intervals corresponding to the at least two types of physical layer channel/signal processing capabilities.

In an implementation, the configuration or indication information carries an association relationship between first time intervals corresponding to the at least two types of physical layer channel/signal processing capabilities or carries an index of the association relationship.

In an implementation, the configuration or indication information carries a first time interval corresponding to at least one type of physical layer channel/signal processing capability or carries an index of the first time interval corresponding to the at least one type of physical layer channel/signal processing capability; in which the association relationship between the first time intervals corresponding to the at least two types of physical layer channel/signal processing capabilities is an association relationship preset by a protocol.

In an implementation, the resource includes at least one of: a bandwidth part, a random access occasion, a preamble sequence in a shared random access occasion, or a PUSCH time/frequency domain resource.

In a second aspect, embodiments of the disclosure provide another terminal device scheduling method, performed by a network device. The method includes: receiving a random access message sent by the terminal device; determining a random access message processing time delay of the terminal device based on a resource of the random access message; and scheduling a transmission of a subsequent random access message of the terminal device based on the random access message processing time delay of the terminal device.

In an implementation, the method further includes: sending a configuration or indication information to the terminal device; in which the configuration or indication information is used for configuring or indicating candidate resource groups corresponding to at least two types of physical layer channel/signal processing capabilities of terminal devices.

In an implementation, a physical layer channel/signal includes one or more of: a Physical Random Access Channel (PRACH), a Physical Uplink Shared Channel (PUSCH), a Physical Downlink Shared Channel (PDSCH), a Physical Uplink Control Channel (PUCCH), a Physical Downlink Control Channel (PDCCH), a Channel State Information Reference Signal (CSI-RS), a Channel Sounding Reference Signal (SRS), a Phase Tracking Reference Signal (PTRS), or a Tracking Reference Signal (TRS).

In an implementation, the physical layer channel/signal processing capabilities of different terminal devices correspond to different candidate resource groups.

In an implementation, determining the random access message processing time delay of the terminal device based on the resource corresponding to the random access message includes: in response to the resource corresponding to the random access message being a set resource included in at least two candidate resource groups, determining that the random access message processing time delay of the terminal device is a relaxed time delay.

In an implementation, the random access message is a first random access message.

In an implementation, the random access message is a third random access message, and a mapping relationship between candidate resource groups and the physical layer channel/signal processing capabilities of the terminal devices is determined based on first time intervals corresponding to the at least two types of physical layer channel/signal processing capabilities, in which the first time interval is a time interval between a time when a last symbol of a second random access message is received by the terminal device and a time when a first symbol of a third random access message is sent.

In an implementation, the configuration or indication information carries the first time intervals corresponding to the at least two types of physical layer channel/signal processing capabilities or carries indexes of first time intervals corresponding to the at least two types of physical layer channel/signal processing capabilities.

In an implementation, the configuration or indication information carries an association relationship between the first time intervals corresponding to the at least two types of physical layer channel/signal processing capabilities or carries an index of the association relationship.

In an implementation, the configuration or indication information carries a first time interval corresponding to at least one type of physical layer channel/signal processing capability or carries an index of a first time interval corresponding to the at least one type of physical layer channel/signal processing capability, in which the association relationship between the first time intervals corresponding to the at least two types of physical layer channel/signal processing capabilities is a preset association relationship.

In an implementation, the resource includes at least one of: a bandwidth part, a random access occasion, a preamble sequence in a shared random access occasion, or a PUSCH time/frequency domain resource.

In a third aspect, embodiments of the disclosure provide another terminal device scheduling method. The method is performed by a network device. The method includes: scheduling a transmission of a subsequent random access message of the terminal device in a serving cell where the network device is in based on a relaxed random access message processing time delay of the terminal device.

In an implementation, the serving cell supports an access of a reduced capability terminal device.

In a fourth aspect, embodiments of the disclosure provide a terminal device scheduling apparatus. The apparatus is applied to the terminal device. The apparatus includes: a processing unit configured to determine a resource corresponding to a random access message based on a physical layer channel/signal processing capability of the terminal device; and a transceiver unit configured to use the resource to send the random access message to a network device, to enable the network device to determine a random access message processing time delay for the terminal device based on the resource corresponding to the random access message and to schedule a transmission of a subsequent random access message of the terminal device.

In an implementation, a physical layer channel/signal includes one or more of: a Physical Random Access Channel (PRACH), a Physical Uplink Shared Channel (PUSCH), a Physical Downlink Shared Channel (PDSCH), a Physical Uplink Control Channel (PUCCH), a Physical Downlink Control Channel (PDCCH), a Channel State Information Reference Signal (CSI-RS), a Channel Sounding Reference Signal (SRS), a Phase Tracking Reference Signal (PTRS), or a Tracking Reference Signal (TRS).

In an implementation, the transceiver unit is further configured to: receive a configuration or indication information sent by the network device; in which the configuration or indication information is used for configuring or indicating candidate resource groups corresponding to at least two types of physical layer channel/signal processing capabilities of terminal devices.

In an implementation, physical layer channel/signal processing capabilities of different terminal devices correspond to different candidate resource groups.

In an implementation, the processing unit is specifically configured to: in response to the terminal device being an evolved reduced capability terminal device or in response to the physical layer channel/signal processing capability of the terminal device being a relaxed processing capability, determine the candidate resource group of the terminal device based on a mapping relationship between candidate resource groups and the physical layer channel/signal processing capabilities of the terminal devices; and determine the resource for transmitting the random access message from the candidate resource group of the terminal device.

In an implementation, the random access message is a first random access message.

In an implementation, the random access message is a third random access message, and the mapping relationship between the candidate resource groups and the physical layer channel/signal processing capabilities of the terminal devices is determined based on first time intervals corresponding to at least two types of physical layer channel/signal processing capabilities, in which the first time interval is a time interval between a time when a last symbol of a second random access message is received by the terminal device and a time when a first symbol of a third random access message is sent.

In an implementation, the configuration or indication information carries the first time intervals corresponding to the at least two types of physical layer channel/signal processing capabilities or carries indexes of the first time intervals corresponding to the at least two types of physical layer channel/signal processing capabilities.

In an implementation, the configuration or indication information carries an association relationship between the first time intervals corresponding to the at least two types of physical layer channel/signal processing capabilities or carries an index of the association relationship.

In an implementation, the configuration or indication information carries a first time interval corresponding to at least one type of physical layer channel/signal processing capability or carries an index of the first time interval corresponding to the at least one type of physical layer channel/signal processing capability; in which the association relationship between the first time intervals corresponding to the at least two types of physical layer channel/signal processing capabilities is an association relationship preset by a protocol.

In an implementation, the resource includes at least one of: a bandwidth part, a random access occasion, a preamble sequence in a shared random access occasion, or a PUSCH time/frequency domain resource.

In a fifth aspect, embodiments of the disclosure provide another terminal device scheduling apparatus. The apparatus is applied to a network device. The apparatus includes: a transceiver unit configured to receive a random access message sent by the terminal device; and a processing unit configured to determine a random access message processing time delay of the terminal device based on a resource corresponding to the random access message. The processing unit is further configured to schedule a transmission of a subsequent random access message of the terminal device based on the random access message processing time delay of the terminal device.

In an implementation, the transceiver unit is further configured to: send a configuration or indication information to the terminal device; in which the configuration or indication information is used for configuring or indicating candidate resource groups corresponding to physical layer channel/signal processing capabilities of at least two types of terminal devices.

In an implementation, a physical layer channel/signal include one or more of: a Physical Random Access Channel (PRACH), a Physical Uplink Shared Channel (PUSCH), a Physical Downlink Shared Channel (PDSCH), a Physical Uplink Control Channel (PUCCH), a Physical Downlink Control Channel (PDCCH), a Channel State Information Reference Signal (CSI-RS), a Channel Sounding Reference Signal (SRS), a Phase Tracking Reference Signal (PTRS), or a Tracking Reference Signal (TRS).

In an implementation, physical layer channel/signal processing capabilities of different terminal devices correspond to different candidate resource groups.

In an implementation, the processing unit is specifically configured to: determine that the random access message processing time delay of the terminal device is a relaxed time delay in response to the resource corresponding to the random access message being a set resource included in at least two candidate resource groups.

In an implementation, the random access message is a first random access message.

In an implementation, the random access message is a third random access message, and a mapping relationship between candidate resource groups and the physical layer channel/signal processing capabilities of the terminal devices is determined based on first time intervals corresponding to at least two types of physical layer channel/signal processing capabilities, in which the first time interval is a time interval between a time when a last symbol of a second random access message is received by the terminal device and a time when a first symbol of a third random access message is sent.

In an implementation, the configuration or indication information carries the first time intervals corresponding to the at least two types of physical layer channel/signal processing capabilities or carries indexes of the first time intervals corresponding to the at least two types of physical layer channel/signal processing capabilities.

In an implementation, the configuration or indication information carries an association relationship between the first time intervals corresponding to the at least two types of physical layer channel/signal processing capabilities or carries an index of the association relationship.

In an implementation, the configuration or indication information carries a first time interval corresponding to at least one type of physical layer channel/signal processing capability or carries an index of a first time interval corresponding to the at least one type of physical layer channel/signal processing capability, in which the association relationship between the first time intervals corresponding to the at least two types of physical layer channel/signal processing capabilities is a preset association relationship.

In an implementation, the resource includes at least one of: a bandwidth part, a random access occasion, a preamble sequence in a shared random access occasion, or a PUSCH time/frequency domain resource.

In a sixth aspect, embodiments of the disclosure provide another terminal device scheduling apparatus. The apparatus is applied to a network device. The apparatus includes: a processing unit configured to schedule a transmission of a subsequent random access message of the terminal device in a serving cell where the network device is in based on a relaxed random access processing time delay of the terminal device.

In an implementation, the serving cell supports an access of a reduced capability terminal device.

In a seventh aspect, embodiments of the disclosure provide a communication device. The communication device includes a processor and a memory. The memory has a computer program stored thereon. The processor is configured to execute the computer program stored on the memory, to cause the communication device to execute the above method described in the first aspect.

In an eighth aspect, embodiments of the disclosure provide a communication device. The communication device includes a processor and a memory. The memory has a computer program stored thereon. The processor is configured to execute the computer program stored on the memory, to cause the communication device to execute the above method described in the second aspect or the third aspect.

In a ninth aspect, embodiments of the disclosure provide a communication device. The device includes a processor and an interface circuit. The interface circuit is configured to receive code instructions and transmit the code instructions to the processor. The processor is configured to run the code instructions to cause the device to perform the above method described in the first aspect.

In a tenth aspect, embodiments of the disclosure provide a communication device. The device includes a processor and an interface circuit. The interface circuit is configured to receive code instructions and transmit the code instructions to the processor. The processor is configured to run the code instructions to cause the device to perform the above method described in the second aspect or the third aspect.

In an eleventh aspect, embodiments of the disclosure provide a communication system. The system includes the communication device described in the fourth aspect and the communication device described in the fifth aspect or the sixth aspect, or the system includes the communication device described in the seventh aspect and the communication device described in the eighth aspect, or the system includes the communication device described in the ninth aspect and the communication device described in the tenth aspect.

In a twelfth aspect, embodiments of the disclosure provide a computer-readable storage medium. The storage medium is configured to store instructions used by the above-mentioned terminal device. The instructions are configured to cause the terminal device to perform the above method described in the first aspect when the instructions are executed.

In a thirteenth aspect, embodiments of the disclosure provide a computer-readable storage medium. The storage medium is configured to store instructions used by the above-mentioned terminal device. The instructions are configured to cause the terminal device to perform the above method described in the first aspect or the third aspect when the instructions are executed.

In a fourteenth aspect, the disclosure further provides a computer program product including a computer program. When the computer program runs on a computer, the computer is caused to execute the above method described in the first aspect.

In a fifteenth aspect, the disclosure further provides a computer program product including a computer program. When the computer program runs on a computer, the computer is caused to execute the above method described in the second aspect or the third aspect.

In a sixteenth aspect, the disclosure provides a chip system. The chip system includes at least one processor and an interface, supporting the terminal device to realize functions involved in the first aspect, such as determining or processing at least one of data or information involved in the above method. In a possible design, the chip system further includes a memory. The memory is configured to store necessary computer programs and data of the terminal device. The chip system may consist of chips or may include chips and other discrete devices.

In a seventeenth aspect, the disclosure provides a chip system. The chip system includes at least one processor and an interface, supporting the terminal device to realize functions involved in the second aspect or the third aspect, such as determining or processing at least one of data or information involved in the above method. In a possible design, the chip system further includes a memory. The memory is configured to store necessary computer programs and data of the terminal device. The chip system may consist of chips or may include chips and other discrete devices.

In an eighteenth aspect, the disclosure provides a computer program that, when run on a computer, causes the computer to perform the above method described in the first aspect.

In a nineteenth aspect, the disclosure provides a computer program that, when run on a computer, causes the computer to perform the above method described in the second aspect or the third aspect.

## BRIEF DESCRIPTION OF THE DRAWINGS

In order to more clearly illustrate the technical solutions according to embodiments of the disclosure or the background art, the following will describe the drawings that need to be used in embodiment of the disclosure or the background art.

FIG. 1 is a schematic structural diagram of a communication system according to an embodiment of the disclosure.

FIG. 2 is a schematic flowchart illustrating a terminal device scheduling method according to an embodiment of the disclosure.

FIG. 3 is a schematic flowchart illustrating a terminal device scheduling method according to an embodiment of the disclosure.

FIG. 4 is a schematic flowchart illustrating a terminal device scheduling method according to an embodiment of the disclosure.

FIG. 5 is a schematic flowchart illustrating a terminal device scheduling method according to an embodiment of the disclosure.

FIG. 6 is a schematic flowchart illustrating a terminal device scheduling method according to an embodiment of the disclosure.

FIG. 7 is a schematic flowchart illustrating a terminal device scheduling method according to an embodiment of the disclosure.

FIG. 8 is a schematic flowchart illustrating a terminal device scheduling method according to an embodiment of the disclosure.

FIG. 9 is a schematic diagram illustrating a terminal device scheduling apparatus according to an embodiment of the disclosure.

FIG. 10 is a schematic diagram illustrating a terminal device scheduling apparatus according to an embodiment of the disclosure.

FIG. 11 is a schematic diagram illustrating a terminal device scheduling apparatus according to an embodiment of the disclosure.

FIG. 12 is a schematic structural diagram illustrating a communication device according to an embodiment of the disclosure.

FIG. 13 is a schematic structural diagram illustrating a chip according to an embodiment of the disclosure.

## DETAILED DESCRIPTION

For ease of understanding, terms involved in the disclosure will be firstly introduced.

1. Physical uplink shared channel (PUSCH)

The PUSCH is used for carrying uplink higher layer/physical layer control signaling and user data.

2. Physical downlink shared channel (PDSCH)

The PDSCH is used for carrying downlink higher layer control signaling and user data.

3. Physical downlink control channel (PDCCH)

The PDCCH channel transmits Downlink Control Information (DCI) related to the physical uplink or downlink shared channel (PUSCH, PDSCH). The DCI information includes resource block (RB) allocation information, Hybrid Automatic Repeat Request (HARQ) process identification or other related information. Only when the terminal device correctly perform decoding to obtain the DCI information, can the PDSCH data or the PUSCH data be correctly processed.

4. Bandwidth part (BWP)

The BWP is a subset bandwidth of the terminal channel bandwidth, which flexibly adjusts the receiving and sending bandwidth of the terminal device through the bandwidth adaptation in New Radio (NR), such that the receiving and sending bandwidth of the terminal device does not need to be the same as the bandwidth of the cell. The terminal may only activate one uplink (UL) BWP and one downlink (DL) BWP at the same time, and each BWP is configured with a subcarrier spacing (SCS). Unless otherwise specified, all signals and channels on the BWP may use this SCS.

5. Hybrid automatic repeat request (HARQ)

The HARQ is a new type of communication technology based on Forward Error Correction (FEC) and automatic retransmission (ARQ) developed for better anti-interference and anti-fading, improving system throughput (effectiveness) and reliability of data transmission.

In order to better understand the terminal device scheduling methods and apparatuses according to embodiments of the disclosure, the communication system to which embodiments of the disclosure are applicable is firstly described below.

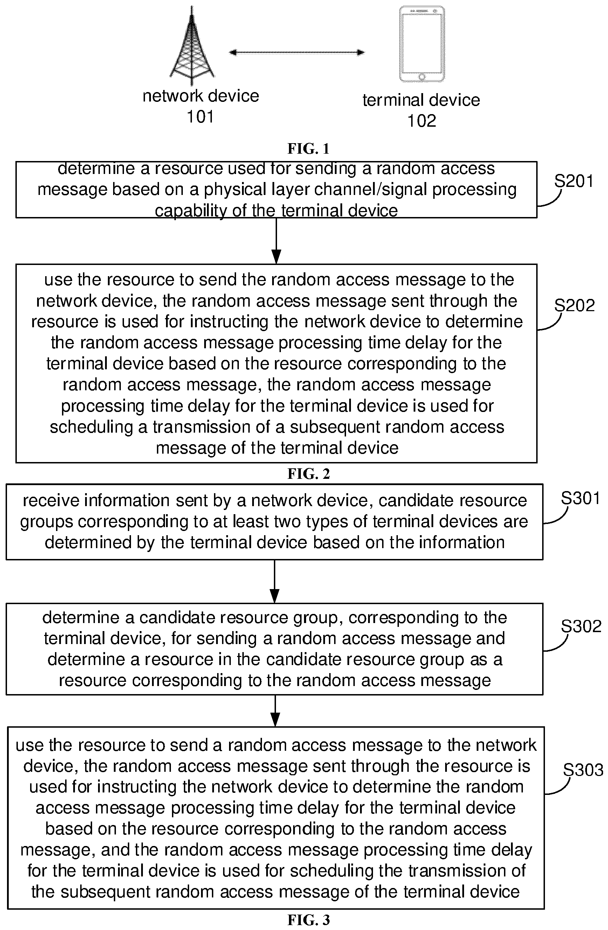

As illustrated in FIG. 1, FIG. 1 is a schematic structural diagram of a communication system according to an embodiment of the disclosure. The communication system may include, but is not limited to, one network device and one terminal device. The number and form of devices illustrated in FIG. 1 are examples only and do not constitute a limitation to embodiments of the disclosure. In practical applications, two or more network devices or two or more terminal devices may be included. The communication system illustrated in FIG. 1 includes one network device 101 and one terminal device 102 as an example.

It is noteworthy that the technical solutions according to embodiments of the disclosure may be applied to various communication systems, such as a Long Term Evolution (LTE) system, a fifth generation (5G) mobile communication system, a 5G new radio (NR) system, or other future mobile communication systems.

The network device 101 in embodiments of the disclosure is an entity on a network side for transmitting or receiving signals. For example, the network device 101 may be an evolved NodeB (eNB), a transmission reception point (TRP), a next generation NodeB (gNB) in an NR system, a base station in other future mobile communication systems, or an access node in a wireless fidelity (WiFi) system. Embodiments of the disclosure do not limit the specific technology and specific device form adopted by the network device. The network device according to embodiments of the disclosure may be composed of a central unit (CU) and distributed unit(s) (DU). The CU may also be called a control unit. By adapting the CU-DU architecture, the network device, such as the protocol layer of the base station, may be separated, placing the functions of some protocol layers in the CU for centralized control, and distributing the remaining part or all of the functions of the protocol layer in the DUs for centrally control by the CU.

The terminal device 102 in embodiments of the disclosure is an entity on a user side for receiving or transmitting signals, such as a mobile phone. The terminal device may also be called terminal, user equipment (UE), mobile station (MS), mobile terminal (MT) and so on. The terminal device may be a vehicle having a communication function, a smart vehicle, a mobile phone, a wearable device, a Pad, a computer having a wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, a wireless terminal device in smart home, or the like. Embodiments of the disclosure do not limit the specific technology and specific device form adopted by the terminal device.

It is understandable that the communication system according to embodiments of the disclosure is to illustrate the technical solution according to embodiments of the disclosure more clearly and does not constitute a limitation to the technical solution according to embodiments of the disclosure. With the evolution of the system architecture and the emergence of new business scenarios, the technical solution according to embodiments of the disclosure is also applicable to similar technical problems.

In the above communication system, a formula for calculating the PDSCH processing procedure time of the terminal device is shown in the following formula (1):

$$T_{proc,1} = (N_1 + d_{1,1})(2048 + 144) \cdot \kappa 2^{-\mu} \cdot T_c \qquad (1)$$

where Tproc.1 represents the PDSCH processing procedure time of the terminal device, the value of N1 is related to the value of $\mu$ of the terminal device; there is a correspondence between the value of $\mu$ and the subcarrier spacing such that the value of $\mu$ is determined based on the subcarrier spacing; $d_{1,1}$ indicates the processing time under a specific circumstance when a PDSCH mapping method is A or B, TC is a basic time unit in the communication system, and k is defined in Article 4.1 of 3GPP standard TS38.214.

The PDSCH processing procedure of the terminal device includes: a PDSCH decoding procedure and a PUCCH preparation procedure. Correspondingly, the PDSCH processing procedure time Tproc,1 of the terminal device includes the PDSCH decoding time and the PUCCH preparation time, and the terminal device may perform the HARQ-ACK feedback only after Tproc,1 after the end of the transmission of the last symbol on the PDSCH. In performing a time-domain resource indication for the HARQ-ACK feedback, the network device needs to consider the PDSCH decoding time and PUCCH preparation time of the terminal device.

In Release 15, the formula for calculating the PUSCH processing procedure time of the terminal device is shown in the following formula (2):

$$T_{proc,2} = \max \left( (N_2 + d_{2,1})(2048 + 144) \cdot \kappa 2^{-\mu} \cdot T_c, d_{2,2} \right) \qquad (2)$$

where Tproc,2 represents the PUSCH processing procedure time of the terminal device and the terminal device may perform the PUSCH transmission only after Tproc,2 after the receiving of a scheduling DCI. In scheduling the PUSCH, the network device needs to consider the PUSCH processing procedure time of the terminal device. $d_{2,1}$ indicates a processing time when the Demodulation Reference Signal (DMRS) is configured as a specific case. If a first one of symbols of the time domain resource allocated by the PUSCH only contains the DMRS, then $d_{2,1} = 0$; otherwise, $d_{2,1} = 1$. $d_{2,2}$ represents a delay introduced by BWP switching. If the DCI triggers the uplink BWP switching, then $d_{2,2}$ is the BWP switching delay; otherwise $d_{2,2} = 0$.

In the above communication system, multiple terminal devices may access one serving cell (SC), such as a terminal device with a relaxed processing capability, a terminal device with an unrelaxed processing capability, or the like. However, different terminal devices have different PDSCH processing procedure time and different PUSCH processing procedure time. For the above two types of terminal devices with different processing capabilities, the network device schedules all terminal devices accessing the serving cell based on the unrelaxed processing capability, and thus the terminal device with the relaxed processing capability will not have enough time to perform PDSCH or PUSCH processing or preparation, resulting in that a random access message of the terminal device with the relaxed processing capability is difficult to send normally.

In Release 18, it is proposed to relax the processing time delay, including PDSCH processing time (N1) and PUSCH preparation time (N2), of the terminal. For example, the processing delay is relaxed to twice the UE capability 1 in Release 16, to reduce the cost of the terminal. In the eRedcap project, it is possible to relax the PDSCH processing time delay and the PUSCH preparation time delay for some types of terminals such as factory sensors and other non-safety sensors.

In embodiments of the disclosure, based on differences in channel processing time delays, the terminal devices (user equipment, UEs) may be classified into two types: terminal devices with relaxed processing capabilities and terminal devices with unrelaxed processing capabilities. It is understandable that a terminal device with the relaxed processing capability means that the physical layer channel processing capability or the physical layer signal processing capability of the terminal device has been relaxed, and thus the channel processing time delay is relatively long. A terminal device with the unrelaxed processing capability means that physical layer channel processing capability or the physical layer signal processing capability of the terminal device has not been relaxed, and thus channel processing time delay is relatively short.

In a possible implementation, the terminal device with the relaxed processing capability may be a reduced capability terminal device whose processing capability has been relaxed, also called eRedCap UE. The terminal device with the unrelaxed processing capability is also called non-eRedCap UE, which include at least one of: normal reduced capability terminal device (RedCap UE) or normal terminal device (Normal UE or non-RedCap UE).

In another possible implementation, the terminal device with the relaxed processing capability may include at least one of: a reduced capability terminal device whose processing capability has been relaxed (also called eRedCap UE) or a normal terminal device whose processing capability has been relaxed. The terminal device with the unrelaxed processing capability may include at least one of: a normal reduced capability terminal device (RedCap UE) and a normal terminal device (Normal UE or non-RedCap UE).

To solve this problem, embodiments of the disclosure provide terminal device scheduling methods and apparatuses.

FIG. 2 is a schematic flowchart illustrating a terminal device scheduling method according to an embodiment of the disclosure. The method is performed by a terminal device. As illustrated in FIG. 2, the method may include, but is not limited to, the following.

At step 201, a resource used for sending a random access message is determined based on a physical layer channel/signal processing capability of the terminal device.

In embodiments of the disclosure, the physical layer channel/signal processing capability of the terminal device means the processing capability for the physical layer channel or the processing capability for the physical layer signal of the terminal device. The physical layer channel/signal means a physical layer channel or a physical layer signal.

In embodiments of the disclosure, the physical layer channel/physical layer signal includes one or more of: a Physical Random Access Channel (PRACH), a Physical Uplink Shared Channel (PUSCH), a Physical Downlink Shared Channel (PDSCH), a Physical Uplink Control Channel (PUCCH), a Physical Downlink Control Channel (PDCCH), a Channel State Information Reference Signal (CSI-RS), a Sounding Reference Signal (SRS), a Phase Tracking Reference Signal (PTRS), or a Tracking Reference Signal (TRS).

The processing capability on the CSI-RS is determined by calculating a feedback of the CSI-RS. The feedback of the CSI-RS includes, for example, a precoding matrix indicator (PMI), a rank indication (RI), a channel quality indicator (CQI) or the like. The physical layer channel/signal processing capability will affect the channel processing time delay of the terminal device, to further affect the determination of the resource corresponding to the third random access message and the determination of the resource corresponding to a feedback of the fourth random access message during the random access process of the terminal device.

In embodiments of the disclosure, the random access message refers to an interaction message between the terminal device and the network device during the random access process, such as the first random access message (Msg1), the second random access message (Msg2), the third random access message (Msg3), the fourth random access message (Msg4), or others.

In embodiments of the disclosure, the resource corresponding to the random access message may include at least one of: a bandwidth part, a random access occasion, a preamble sequence in a shared random access occasion, or a PUSCH time/frequency domain resource. For each random access message, the resource corresponding to the random access message may be at least one of the foregoing resources.

At step 202, the resource is used to send the random access message to the network device. The random access message sent using the resource is used to instruct the network device to determine the random access message processing time delay for the terminal device based on the resource corresponding to the random access message. The random access message processing time delay for the terminal device is used for scheduling transmission(s) of subsequent random access message(s) of the terminal device.

In embodiments of the disclosure, after the terminal device determines its own physical layer channel/signal processing capability, the terminal device determines the resource used for transmitting the random access message and sends the random access message to the network device through the resource. The random access message sent using the resource is used for instructing the network device to determine the random access message processing time delay of the terminal device based on the resource corresponding to the random access message and to properly schedule the transmission(s) of the subsequent random access message(s) of the terminal device accordingly. That is, corresponding to the method on the terminal device side, after receiving the random access message sent using the resource, the network device may perform the following operations based on the random access message sent using the resource: the random access message processing time delay of the terminal device is determined based on the resource used for transmitting the random access message and properly schedule the transmission(s) of the subsequent random access message(s) of the terminal device.

The terminal device with the relaxed processing capability and the terminal device with the unrelaxed processing capability may use different resources to send the random access message. Corresponding to the method on the terminal device side, after the network device receives the random access message sent using the resource, the network device may perform the following operations based on the random access message sent using the resource: determining the type of the terminal device that has sent the random access message or determining the processing capability of the terminal device that has sent the random access message based on the resource of the random access message and determining the random access message processing time delay of the terminal device.

The terminal device with the relaxed processing capability and the terminal device with the unrelaxed processing capability may use different resources to send the random access message. In an example, a terminal device with the relaxed processing capability uses a first BWP resource, while a terminal device with the unrelaxed processing capability uses a second BWP resource, where the first BWP resource and the second BWP resource do not completely overlap or do not overlap at all. The phrase "not completely overlap" means that a part of the first BWP resource overlaps with a part of the second BWP resource. In another example, the terminal device with the relaxed processing capability uses a preamble sequence in the first set of preamble sequences, while the terminal device with the unrelaxed processing capability uses a preamble sequence in the second set of preamble sequences, where there is no intersection between the first set of preamble sequences and the second set of preamble sequences. Embodiments of the disclosure do not give examples one by one.

With the embodiments of the disclosure, the terminal device may determine the resource used for sending the random access message based on its own physical layer channel/signal processing capability and use the resource to send the random access message to the network device. The random access message sent using the resource is used for instructing the network device to determine the random access message processing time delay of the terminal device based on the resource corresponding to the random access message, where the random access message processing time delay of the terminal device is used for scheduling the subsequent random access message(s) of the terminal device. In this way, the network device may allocate different resources to the subsequent random access message(s) for the terminal devices with different processing capabilities, such that the terminal device may normally send the message through the properly allocated resource, to avoid the resource rescheduling when the message sending fails, avoid the resource waste, and improve the resource utilization.

FIG. 3 is a schematic flowchart illustrating a terminal device scheduling method according to an embodiment of the disclosure. The method is performed by a terminal device. As illustrated in FIG. 3, the method may include, but is not limited to, the following.

At step 301, information sent by a network device is received. Candidate resource groups corresponding to at least two types of terminal devices are determined by the terminal device based on the information. In some possible implementations, the information may be a configuration signaling, configuration parameter(s), or indication information.

In embodiments of the disclosure, different terminal devices correspond to different candidate resource groups. Different terminal devices means the physical layer channel processing capabilities of the terminal devices are different or the physical layer signal processing capabilities of the terminal devices are different.

At step 302, a candidate resource group, corresponding to the terminal device, for sending a random access message is determined, and a resource in the candidate resource group is determined as a resource corresponding to the random access message.

In embodiments of the disclosure, the physical layer channel/signal processing capability of the terminal device means the physical layer channel processing capability or the physical layer signal processing capability of the terminal device.

In the above step 301 and step 302, the terminal device may determine a mapping relationship between candidate resource groups and terminal device types based on the received information. The terminal device type means that the physical layer channel processing capabilities of the terminal devices are different, or the physical layer signal processing capabilities of the terminal devices are different. The terminal device may determine the candidate resource group corresponding to the terminal device based on its own physical layer channel processing capability or its own physical layer signal processing capability.

In the above step 301 and step 302, the terminal device may also determine the mapping relationship between the candidate resource groups and the terminal device types based on a protocol or pre-configuration information. The terminal device type means that the physical layer channel processing capabilities of the terminal devices are different or the physical layer signal processing capabilities of the terminal devices are different. The terminal device may determine the candidate resource group corresponding to the terminal device based on its own physical layer channel processing capability or its own physical layer signal processing capability.

In all embodiments of the disclosure, the candidate resource group may include one or more candidate resources.

In embodiments of the disclosure, the terminal device determines the mapping relationship between the terminal devices with different processing capabilities and different candidate resource groups of the random access message based on the received information; determines, based on its own physical layer channel processing capability or its own physical layer signal processing capability, the candidate resource group that has a mapping relationship with its own physical layer channel processing capability or its own physical layer signal processing capability, that is, a candidate resource group for sending the random access message; and uses the resource in the candidate resource group to send the random access message to the network device.

In embodiments of the disclosure, the physical layer channel/physical layer signal includes one or more of: a PRACH, a PUSCH, a PDSCH, a PUCCH, a PDCCH, a CSI-RS, an SRS, a PTRS, or a TRS.

In embodiments of the disclosure, in response to the terminal device is an evolved reduced capability terminal device (eRedCap UE) or the physical layer channel processing capability of the terminal device or the physical layer signal processing capability of the terminal device being a relaxed processing capability, the candidate resource group of the terminal device is determined based on the mapping relationship between the candidate resource groups and the physical layer channel processing capability of the terminal device or the physical layer signal processing capability of the terminal device; and determines the resource used for transmitting the random access message from the candidate resource group of the terminal device. There are no identical candidate resources in different candidate resource groups.

In all embodiments of the disclosure, the candidate resource group may include one or more candidate resources.

In an example, in response to the terminal device being an evolved reduced capability terminal device, the candidate resource group is determined based on the mapping relationship between the candidate resource groups and the evolved reduced capability terminal devices and the resource used for transmitting the random access message is determined from the candidate resource group. The evolved reduced capability terminal device may be the terminal device with the relaxed processing capability.

In another example, in response to the physical layer channel processing capability of the terminal device or the physical layer signal processing capability of the terminal device being the relaxed processing capability, the candidate resource group is determined based on the mapping relationship between the candidate resource groups and the physical layer channel processing capabilities of the terminal devices or the physical layer signal processing capabilities of the terminal devices; and the resource used for transmitting the random access message is determined from the candidate resource group. The terminal device with the relaxed processing capability is relaxed may be a reduced capability terminal device with the relaxed processing capability. In yet another example, in response to the terminal device being a terminal device with the relaxed processing capability, the candidate resource group is determined based on the mapping relationship between the candidate resource groups and the terminal device types and the resource for transmitting the random access message is determined from the candidate resource group.

At step 303, the resource is used to send a random access message to the network device. The random access message sent through the resource is used for instructing the network device to determine the random access message processing time delay for the terminal device based on the resource corresponding to the random access message, and the random access message processing time delay for the terminal device is used for scheduling the transmission(s) of the subsequent random access message(s) of the terminal device.

In embodiments of the disclosure, the terminal device determines the candidate resource group for sending the random access message based on its own physical layer channel processing capability or its own physical layer signal processing capability, uses a resource in the candidate resource group as the resource corresponding to the random access message, and sends the random access message to the network device through the resource. Corresponding to the method on the terminal device side, after the network device receives the random access message, the network device determines the random access message processing time delay of the terminal device based on the resource used for transmitting the random access message, and then properly schedule the transmission(s) of the subsequent random access(s) message of the terminal device.

In some possible implementations, the random access message may be a first random access message (Msg1) or a third random access message (Msg3). In an example, the random access message may be the first random access message (Msg1), and the terminal device configures different resources for the first random access message to perform the reporting of the physical layer channel processing capability or the physical layer signal processing capability of the terminal device, and the "subsequent random access message(s)" involved in the scheduling of the terminal device by the network device refer to the third random access message and the feedback of the fourth random access message. In another example, the random access message may be a third random access message (Msg3), the terminal device configures different resources for the third random access message to perform the reporting of the physical layer channel processing capability of the terminal device or the physical layer signal processing capability; and the "subsequent random access message(s)" involved in the scheduling of the terminal device by the network device refers to the feedback of the fourth random access message.

With embodiments of the disclosure, the terminal device may receive the information sent by the network device. The information is used for determining the candidate resource group corresponding to the terminal device. The terminal device determines the candidate resource group corresponding to the random access message of the terminal device based on the information and its own physical layer channel processing capability and its own physical layer signal processing capability. Further, the terminal device determines, from the candidate resource group, the resource used for sending the random access message and uses the resource included in the candidate resource group to send the random access message to the network device, such that the network device determines the random access message processing time delay of the terminal device based on the resource used for transmitting the random access message and schedules the transmission(s) of the subsequent random access message(s) of the terminal device. In this way, the terminal device may select the resource for sending the ransom access message from the corresponding candidate resource group based on its own physical layer channel processing capability or its own physical layer signal processing capability, such that the network device may determine the processing capability of the terminal device based on the resource used for sending the random access message, and then properly schedule the transmission(s) of the subsequent random access message(s) of the terminal device, thereby avoiding the resource waste and improving the resource utilization. Certainly, the terminal device may also determine the candidate resource group corresponding to the terminal device based on a communication protocol.

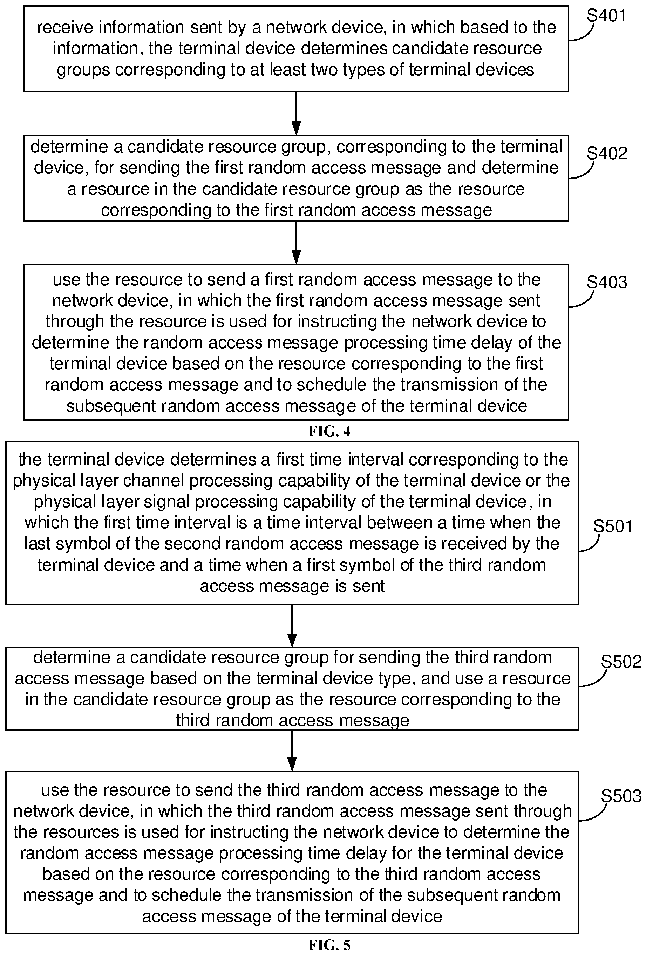

In foregoing embodiments, the random access message may be the first random access information (Msg1). That is, the method may include the following as illustrated in FIG. 4.

At step 401, information sent by a network device is received. Based to the information, the terminal device determines candidate resource groups corresponding to at least two types of terminal devices. In some possible implementations, the information may be a configuration signaling, configuration parameter(s), or indication information.

In embodiments of the disclosure, different terminal devices correspond to different candidate resource groups. Different terminal devices means that the physical layer channel processing capabilities of the terminal devices are different or the physical layer signal processing capabilities of the terminal devices are different.

At step 402, a candidate resource group, corresponding to the terminal device, for sending the first random access message is determined and a resource in the candidate resource group is determined as the resource corresponding to the first random access message.

In embodiments of the disclosure, the physical layer channel/signal processing capability of the terminal device refers to the physical layer channel processing capability or the physical layer signal processing capability of the terminal device.

In the above step 401 and step 402, the terminal device may determine the mapping relationship between the candidate resource groups and the terminal device types based on the received information. The terminal device type means that the physical layer channel processing capabilities of the terminal devices are different, or the physical layer signal processing capabilities of the terminal devices are different. The terminal device may determine the candidate resource group corresponding to the terminal device based on its own physical layer channel processing capability or its own physical layer signal processing capability.

In the above step 401 and step 402, the terminal device may also determine the mapping relationship between the candidate resource groups and the terminal device types based on a protocol or pre-configuration information. The terminal device type means that the physical layer channel processing capabilities of the terminal devices are different, or the physical layer signal processing capabilities of the terminal devices are different. The terminal device may determine the candidate resource group corresponding to the terminal device based on its own physical layer channel processing capability or its own physical layer signal processing capability.

In all embodiments of the disclosure, the candidate resource group may include one or more candidate resources.

At step 403, the resource is used to send a first random access message to the network device. The first random access message sent using the resource is used for instructing the network device to determine the random access message processing time delay of the terminal device based on the resource corresponding to the first random access message and to schedule the transmission(s) of the subsequent random access message(s) of the terminal device.

In embodiments of the disclosure, the terminal device determines the candidate resource group for sending the first random access message based on its own physical layer channel processing capability or its own physical layer signal processing capability, determines a resource in the candidate resource group as the resource for sending the first random access message, and sends the first random access message through the resource to the network device. Corresponding to the method on the terminal device side, after the network device receives the first random access message, the network device determines the random access message processing time delay of the terminal device based on the resource for transmitting the first random access message, and reasonably schedules the transmission(s) of the subsequent random access message(s) of the terminal device.

When the random access message is the first random access message (Msg1), the terminal devices may report their physical layer channel/signal processing capabilities of the terminal devices by configuring different resources for the first random access message. Then, the "subsequent random access message(s)" involved in scheduling the terminal device by the network device refers to the third random access message and the feedback of the fourth random access message.

FIG. 5 is a schematic flowchart illustrating a terminal device scheduling method according to an embodiment of the disclosure. The method is performed by a terminal device. As illustrated in FIG. 5, the method may include, but is not limited to, the following.

At step 501, the terminal device determines a first time interval corresponding to the physical layer channel processing capability of the terminal device or the physical layer signal processing capability of the terminal device. The first time interval is a time interval between a time when the last symbol of the second random access message is received by the terminal device and a time when a first symbol of the third random access message is sent.

In embodiments of the disclosure, the terminal device may determine the first time interval corresponding to the terminal device based on the received information. In embodiments of the disclosure, the information received by the terminal device may be configuration information or indication information, and the information is used for configuring or indicating first time intervals corresponding to at least two different terminal device types. The terminal device type means that the physical layer channel processing capabilities of the terminal devices are different, or the physical layer signal processing capabilities of the terminal devices are different. After receiving the information, the terminal device may determine the candidate resource group corresponding to the terminal device based on its terminal device type. The terminal device type means that the physical layer channel processing capabilities of the terminal devices are different, or the physical layer signal processing capabilities of the terminal devices are different. The terminal device may determine the first time interval corresponding to the terminal device based on its own physical layer channel processing capability or its own physical layer signal processing capability.

In a first example, the information carries the first time intervals corresponding to at least two terminal device types, such that the terminal device may determine its corresponding first time interval based on its terminal device type and information and determine the resource for transmitting the third random access message (Msg3). The terminal device type includes at least one of: a terminal device with a relaxed processing capability, or a terminal device with an unrelaxed processing capability. In all embodiments of the disclosure, the physical layer channel processing capability of the terminal device with the relaxed processing capability or the physical layer signal processing capability of the terminal device with the relaxed processing capability is different respectively from the physical layer channel processing capability of the terminal device with the unrelaxed processing capability or the physical layer signal processing capability of the terminal device with the unrelaxed processing capability.

In a second example, the information carries indexes of first time intervals corresponding to at least two terminal device types. The terminal device may determine the first time intervals corresponding to the at least two terminal device types based on the indexes of the first time intervals corresponding to the at least two terminal device types; determine a mapping relationship between the candidate resource groups and the terminal device types based on the first time intervals corresponding to the at least two terminal device types; and select a corresponding resource for transmitting the third random access message (Msg3) based on its own terminal device type. The terminal device type includes at least one of: a terminal device with the relaxed processing capability or a terminal device with the unrelaxed processing capability. In all embodiments of the disclosure, the physical layer channel processing capability of the terminal device with the relaxed processing capability or the physical layer signal processing capability of the terminal device with the relaxed processing capability is respectively different from the physical layer channel processing capability of the terminal device with the unrelaxed processing capability or the physical layer signal processing capability of the terminal device with the unrelaxed processing capability.

In the above two examples, the network device may directly indicate the first time intervals corresponding to the two terminal device types, or indicate the indexes of the first time intervals.

In a third example, the information carries parameter(s) for determining the first time interval of the terminal device with the unrelaxed processing capability and a parameter value N for determining the first time interval of the terminal device with the relaxed processing capability. In response to the terminal device being a terminal device with the unrelaxed processing capability, the terminal device may determine the first time interval of the terminal device with the unrelaxed processing capability based on the parameter, carried in the information, for determining the first time interval of the terminal device with the unrelaxed processing capability. The parameter for determining the first time interval of the terminal device with the unrelaxed processing capability may be the value of the first time interval, the index of the first time interval, or a parameter used in calculating the first time interval.

In response to the terminal device being a terminal device with the relaxed processing capability, the terminal device with the relaxed processing capability may determine the first time interval of the terminal device with the relaxed processing capability based on the parameter used for determining the first time interval of the terminal device with the unrelaxed processing capability and the parameter value N. When the terminal device determines that or in response to determining that the terminal device is a terminal device with the unrelaxed processing capability, the terminal device with the relaxed processing capability may determine the first time interval corresponding to the terminal device with the relaxed processing capability based on the parameter, used for determining the first time interval of the terminal device with the unrelaxed processing capability, the parameter value N and a calculation rule. The calculation rule may be any rule, which is not limited here. Taking that the calculation rule is "+" as an example, the formula for calculating the first time interval (K_new) corresponding to the terminal device with the relaxed processing capability may be $K\_new = K + N$, where K is the first time interval of the terminal device with the unrelaxed the processing capability. That is, the first time interval of the terminal devices with the relaxed processing capability = the first time interval of the terminal device with the relaxed processing capability + the parameter value N. Taking that the calculation rule is "*" as an example, the formula for calculating the first time interval (K_new) of the terminal device with relaxed processing capability may be $K\_new = K * N$. The calculation rule may be a preset rule, a rule determined based on a communication protocol, or a rule configured by a network device.

After the terminal device determines its corresponding first time interval, the terminal device may further transmit a third random access message (Msg3) on a corresponding resource.

**EP 4 478 823 A1**

In a fourth example, the information carries index information of the first time interval used for determining the unrelaxed processing capability. Further, the terminal with the relaxed processing capacity determines its corresponding first time interval based on the first time interval corresponding to the terminal device with the unrelaxed processing capability and the calculation rule, and transmits the third random access message (Msg3) on the corresponding resource. Taking that the calculation rule is "+" as an example, the formula for calculating the first time interval (K_new) corresponding to the terminal device with relaxed processing capability may be K_new = K + N. Taking that the calculation rule is "*" as an example, the formula for calculating the first time interval (K_new) of the terminal device with the relaxed processing capability may be K_new = K * N, where K is the first time interval of the terminal device with the unrelaxed processing capability, K_new is the first time interval of the terminal device with the relaxed processing capability, and the N value is a preset parameter value in the protocol. The calculation rule may be a preset rule, a rule determined based on a communication protocol, or a rule configured by a network device. The parameter value N may be a preset value, a value determined based on a communication protocol, or the like.

At step 502, a candidate resource group for sending the third random access message is determined based on the terminal device type, and a resource in the candidate resource group is used as the resource corresponding to the third random access message.

In embodiments of the disclosure, the terminal device may determine the resource for transmitting the third random access message based on the first time intervals corresponding to different terminal device types and its own physical layer channel processing capability or its own physical layer signal processing capability, and use the resource to send the third random access message to the network device.

In embodiments of the disclosure, the physical layer channel/physical layer signal includes one or more of: a PRACH, a PUSCH, a PDSCH, a PUCCH, a PDCCH, a CSI-RS, an SRS, a PTRS, or a TRS.

At step 503, the resource is used to send the third random access message to the network device. The third random access message sent through the resources is used for instructing the network device to determine the random access message processing time delay for the terminal device based on the resource corresponding to the third random access message and to schedule the transmission(s) of the subsequent random access message(s) of the terminal device.

In embodiments of the disclosure, after the terminal device determines its own physical layer channel processing capability or its own physical layer signal processing capability, the terminal device determines the candidate resource group for sending the third random access message, uses the resource in the candidate resource group as the resource corresponding to the third random access message, and sends the third random access message to the network device through the resource. Corresponding to the method on the terminal device side, after receiving the third random access message, the network device determines the random access message processing time delay of the terminal device based on the resource used for transmitting the third random access message, and reasonably schedule the transmission(s) of the subsequent random access message(s) of the terminal device. It is noteworthy that the candidate resource group of the third random access message may only include one resource for sending the third random access message (Msg3).

When the random access message is the third random access message (Msg3), the terminal devices may report the physical layer channel processing capabilities or the physical layer signal processing capabilities of the terminal devices by configuring different resources for the third random access message. The "subsequent random access message(s)" involved in the scheduling of the terminal device by the network device refers to the feedback of the fourth random access message.

With embodiments of the disclosure, the terminal device determines the first time interval corresponding to the physical layer channel processing capability or the physical layer signal processing capability of the terminal device. The first time interval is a time interval between a time when the terminal device receives the last symbol of the second random access message and a time when the first symbol of the third random access message is sent. The candidate resource group for sending the third random access message is determined based on the terminal device type and a resource in the candidate resource group is determined as the resource corresponding to the third random access message. The resource is used to send the third random access message to the network device. Corresponding to the method on the terminal device side, the network device determines the random access message processing time delay based on the resource corresponding to the third random access message, and schedule the transmission(s) of the subsequent random access message(s) of the terminal device. In this way, the terminal device may select the resource from the corresponding candidate resource group to send the third random access message based on its own physical layer channel processing capability or its own physical layer signal processing capability, such that the network device may determine the processing capability of the terminal device based on the resource for sending the third random access message, and perform resource scheduling for the transmission(s) of subsequent random access message(s) of the terminal device, thereby avoiding the resource waste and improving the resource utilization.

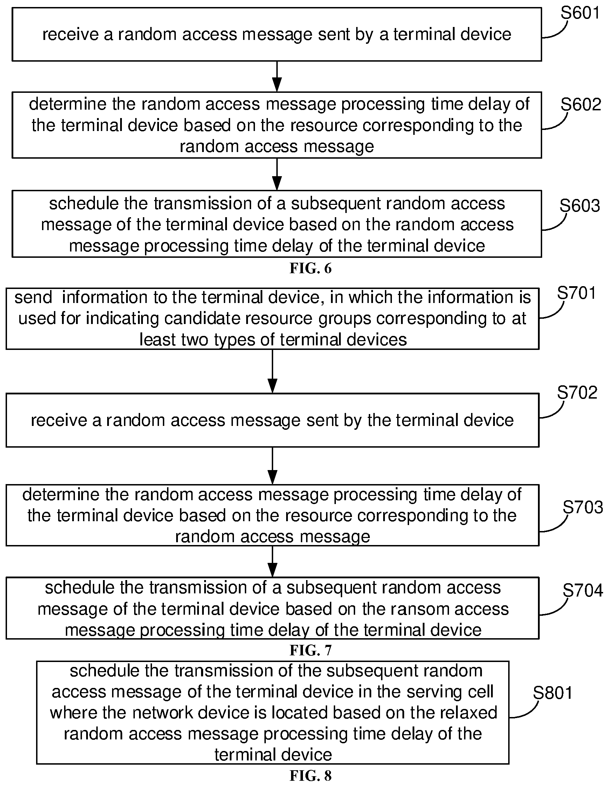

FIG. 6 is a schematic flowchart illustrating a terminal device scheduling method according to an embodiment of the disclosure. The method is performed by a network device. As illustrated in FIG. 6, the method may include, but is not limited to, the following.

14

At step 601, a random access message sent by a terminal device is received.

In embodiments of the disclosure, the random access message refers to an interaction message between the terminal device and the network device during the random access process, such as the first random access message (Msg1), the second random access message (Msg2 ), the third random access message (Msg3), the fourth random access message (Msg4), or the like.

Corresponding to the method on the network device side, in sending the random access message, the terminal device implicitly reports the physical layer channel/signal processing capability of the terminal device through the resource of the random access message, that is, the terminal device implicitly report whether the terminal device is a terminal device with the relaxed processing capability or a terminal device with the unrelaxed processing capability. The network device may determine the random access message processing time delay of the terminal device based on the received random access message. The resource may include at least one of a bandwidth part, a random access occasion, a preamble sequence in a shared random access occasion, or a PUSCH time/frequency domain resource. The physical layer channel/signal processing capability of the terminal device refers to the processing capability of the physical layer channel of the terminal device or the processing capability of the physical layer signal of the terminal device.

The resource for sending the random access message is determined based on the physical layer channel processing capability or the physical layer signal processing capability of the terminal device. There is a correspondence between the resources for sending the random access message and the physical layer channel processing capabilities or physical layer signal processing capabilities. Based on the resource for sending the random access message by the terminal device, the network device may determine the physical layer channel/physical layer signal processing capability of the terminal device.

At step 602, the random access message processing time delay of the terminal device is determined based on the resource corresponding to the random access message.

In embodiments of the disclosure, the resources corresponding to the random access message may include at least one of: a bandwidth part, a random access occasion, a preamble sequence in a shared random access occasion, or a PUSCH time/frequency domain resource.

In embodiments of the disclosure, corresponding to the method on the network device side, in sending the random access message, the terminal device implicitly reports the physical layer channel/signal processing capability of the terminal device by sending the resource of the random access message. That is, the terminal device implicitly reports whether the terminal device is a terminal device with the relaxed processing capability or a terminal device with the unrelaxed processing capability. Therefore, after the network device receives the random access message sent by the terminal device, after determining the resource for receiving the random access message, the network device may determine the physical layer channel processing capability or the physical layer signal processing capability of the terminal device based on the resource and determine the random access message processing time delay based on the physical layer channel processing capability or physical layer signal processing capability of the terminal device.

The terminal device with the relaxed processing capacity and the terminal device with the unrelaxed processing capacity may use different resources to send the random access message, and the network device may, after receiving the random access message sent through the resource, determine the type of the terminal device that have sent the random access message or determine the processing capability of the terminal device that have sent the random access message based on the random access message sent through the resource, and determine the random access message processing time delay of the terminal device.

The terminal device with the relaxed processing capability and the terminal device with the unrelaxed processing capability may use different resources to send the random access message. In an example, the terminal device with the relaxed processing capability uses a first BWP resource, while the terminal device with the unrelaxed processing capability uses a second BWP resource, where the first BWP resource and the second BWP resource do not completely overlap or do not overlap at all. The phrase "not completely overlap" means that a part of the first BWP resource overlaps with a part of the second BWP resource. In another example, the terminal device with the relaxed processing capability uses a preamble sequence in a first set of preamble sequences, while the terminal device with the unrelaxed processing capability uses a preamble sequence in a second set of preamble sequences, where there is no intersection between the first set of preamble sequences and the second set of preamble sequences. Embodiments of the disclosure do not give examples one by one.

At step 603, the transmission(s) of subsequent random access message(s) of the terminal device is/are scheduled based on the random access message processing time delay of the terminal device.

In embodiments of the disclosure, after receiving the random access message, the network device determines the random access message processing time delay of the terminal device based on the resource used for transmitting the random access message, and then properly schedules the transmission(s) of the subsequent random access message(s) of the terminal device.

The random access message may be a first random access message (Msg1) and a third random access message (Msg3). In an example, the random access message may be the first random access message (Msg1).

Corresponding to the method on the network device side, the terminal devices report the physical layer channel/signal processing capabilities of the terminal devices by configuring different resources for the first random access message, and then the "subsequent random access message(s)" involved in the scheduling of the terminal device by the network device refer to the third random access message and the feedback of the fourth random access message. In another example, the random access message may be a third random access message (Msg3). Corresponding to the method on the network device side, the terminal devices report the physical layer channel/signal processing capabilities of the terminal devices by configuring different resources for the third random access message; and then the "subsequent random access message(s)" involved in the scheduling of the terminal device by the network device refers to the feedback of the fourth random access message. The physical layer channel/signal processing capability of the terminal device refers to the processing capability of the physical layer channel of the terminal device or the processing capability of the physical layer signal of the terminal device.

With embodiments of the disclosure, the random access message sent by the terminal device is received; the random access message processing time delay of the terminal device is determined based on the resource corresponding to the random access message, and the transmission(s) of the subsequent random access message(s) of the terminal device is scheduled based on the random access message processing delay of the terminal device. In this way, the network device may allocate different resources to the subsequent random access message(s) for the terminal devices with different processing capabilities, such that the terminal device may use the resource allocated reasonably to send message(s) normally, thereby avoiding the resource rescheduling when the message sending fails, avoiding the resource waste, and improving the resource utilization.

FIG. 7 is a schematic flowchart illustrating a terminal device scheduling method according to an embodiment of the disclosure. The method is performed by a network device. As illustrated in FIG. 7, the method may include, but is not limited to, the following.

At step 701, information is sent to the terminal device. The information is used for indicating candidate resource groups corresponding to at least two types of terminal devices. In some possible implementations, the information may be a configuration signaling, configuration parameter(s), or indication information.

In embodiments of the disclosure, different terminal devices correspond to different candidate resource groups. Different terminal devices means that the physical layer channel processing capabilities of the terminal devices are different, or the physical layer signal processing capabilities of the terminal devices are different.

In embodiments of the disclosure, the physical layer channel/signal processing capability of the terminal device refers to the processing capability of the physical layer channel of the terminal device or the processing capability of the physical layer signal of the terminal device.

In embodiments of the disclosure, the physical layer channel/physical layer signal includes one or more of: a PRACH, a PUSCH, a PDSCH, a PUCCH, a PDCCH, a CSI-RS, an SRS, a PTRS, or a TRS.

In embodiments of the disclosure, the random access message may be a first random access message (Msg1) and a third random access message (Msg3).

When the random access message is the first random access message (Msg1), the mapping relationship between the terminal device types and the candidate resource groups is preset. The terminal device types refer to different physical layer channel processing capabilities of the terminal devices, or different physical layer signal processing capabilities of the terminal devices.

In embodiments of the disclosure, when the random access message is the third random access message (Msg3), the mapping relationship between the candidate resource groups and the terminal device types is determined based on the first time intervals corresponding to at least two types of physical layer channel/signal processing capabilities. The first time interval is a time interval between a time when the terminal device receives the last symbol of the second random access message and a time when the first symbol of the third random access message is received.

The information may be configuration information or indication information. There are many ways to configure or indicate candidate resource groups corresponding to at least two different terminal device types.

In a first example, the information carries the first time intervals corresponding to at least two terminal device types, such that the terminal device may determine its corresponding first time interval based on its terminal device type and the information and determine the resource for transmitting the third random access message (Msg3). The terminal device type includes at least one of: a terminal device with the relaxed processing capability, or a terminal device with the unrelaxed processing capability. In all embodiments of the disclosure, the physical layer channel processing capability of the terminal device with the relaxed processing capability or the physical layer signal processing capability of the terminal device with the relaxed processing capability is respectively different from the physical layer channel processing capability of the terminal device with the unrelaxed processing capability or the physical layer signal processing capability of the terminal device with the unrelaxed processing capability.

In embodiments of the disclosure, the physical layer channel/signal processing capability of the terminal device refers to the processing capability of the physical layer channel of the terminal device or the processing capability of the physical layer signal of the terminal device.

In a second example, the information carries indexes of first time intervals corresponding to at least two terminal device types. The terminal device may determine the first time intervals corresponding to the at least two terminal device types based on the indexes of the first time intervals corresponding to the at least two terminal device types, determine the mapping relationship between candidate resource groups and the terminal device types based on the first time intervals corresponding to the terminal device types, and select the resource for transmitting the third random access message (Msg3) based on its own terminal device type. The terminal device type includes at least one of: a terminal device with a relaxed processing capability, or a terminal device with an unrelaxed processing capability. In all embodiments of the disclosure, the physical layer channel processing capability of the terminal device with the relaxed processing capability or the physical layer signal processing capability of the terminal device with the relaxed processing capability is respectively different from the physical layer channel processing capability of the terminal device with the unrelaxed processing capability or the physical layer signal processing capability of the terminal device with the unrelaxed processing capability.

In the above two examples, the network device may directly indicate the first time intervals corresponding to the two terminal device types, or indicate the indexes of the first time intervals.

In a third example, the information carries a parameter for determining the first time interval of the terminal device with the unrelaxed processing capability and a parameter value N for determining the first time interval of the terminal device with the relaxed processing capability. In response to the terminal device being a terminal device with the unrelaxed processing capability, the terminal device may determine the first time interval of the terminal device with the unrelaxed processing capability based on the parameter, carried in the information, for determining the first time interval of the terminal device with the unrelaxed processing capability. The parameter used for determining the first time interval of the terminal device with the unrelaxed processing capability may be the value of the first time interval, the index of the first time interval, or a parameter used in calculating the first time interval.

In response to the terminal device being a terminal device with the relaxed processing capability, the terminal device with the relaxed processing capability may determine the first time interval of the terminal device with the relaxed processing capability based on the parameter used for determining the first time interval of the terminal device with the unrelaxed processing capability and the parameter value N. When the terminal device determines that or in response to determining that the terminal device is a terminal device with the unrelaxed processing capability, the terminal device with the relaxed processing capability may determine the first time interval of the terminal device with the relaxed processing capability based on the parameter used for determining the first time interval of the terminal device with the unrelaxed processing capability, the parameter value N and a calculation rule. The calculation rule may be any rule, which is not limited here. Taking that the calculation rule is "+" as an example, the formula for calculating the first time interval (K_new) corresponding to the terminal device with the relaxed processing capability may be $K\_new = K + N$; where K is the first time interval of the terminal device with the unrelaxed processing capability. That is, the first time interval of the terminal device with the relaxed processing capability = the first time interval of the terminal device with the unrelaxed processing capability + the parameter value N. Taking that the calculation rule is "*" as an example, the formula for calculating the first time interval (K_new) of the terminal device with the relaxed processing capability may be $K\_new = K * N$. The calculation rule may be a preset rule, a rule determined based on a communication protocol, or a rule configured by a network device.

After the terminal device determines its corresponding first time interval, the terminal device may transmit the third random access message (Msg3) on a corresponding resource.

In a fourth example, the information carries the index information of the first time interval used for determining the unrelaxed processing capability. Further, the terminal device with the relaxed processing capacity determines its corresponding first time interval based on the first time interval corresponding to the terminal with the unrelaxed processing capability and the calculation rule, and transmits the third random access message (Msg3) on the corresponding resource. Taking that the calculation rule is "+" as an example, the formula for calculating the first time interval (K_new) corresponding to the terminal device with the relaxed processing capability may be $K\_new = K + N$. Taking that the calculation rule is "*" as an example, the formula for calculating the first time interval (K_new) of the terminal device with the relaxed processing capability may be $K\_new = K * N$, where K is the first time interval of the terminal device with the unrelaxed processing capability, K_new is the first time interval of the terminal device with the relaxed processing capability, and the N value is a preset parameter value in a protocol. The calculation rule may be a preset rule, a rule determined based on a communication protocol, or a rule configured by a network device. The parameter value N may be a preset value, a value determined based on a communication protocol, or the like.

In embodiments of the disclosure, there are three kinds of time intervals. One is the minimum time interval between the time when the terminal device receives the second random access message and the time when the terminal device sends a new first random access message; the second is the minimum time interval between the time when the terminal device receives the second random access message and the time when the terminal device sends the third random access message (i.e., the first time interval mentioned in embodiments of the disclosure); and the third is the minimum time interval between the time when the terminal device receives the fourth random access message and the time when the terminal device sends the HARQ-ACK feedback message. The terminal devices with different processing capabilities have different time intervals.

For example, for the terminal device with the unrelaxed processing capability, the calculation strategies for the above three time intervals may be as shown in Table 1 below. For the terminal device with the relaxed processing capability, the calculation strategies for the above three time intervals may be shown in Table 2 below.

Table 1

| 3 | T21 | the minimum time interval between a time when the UE receives the Msg2 and the time when the UE sends a new Msg1 | NT,1 + 0.75 |
|---|---|---|---|
| 4 | T3 | the minimum time interval between a time when the UE receives the Msg2 and the time when the UE sends a Msg3 | NT,1 + NT,2 + 0.5 |
| 6 | T5 | the minimum time interval between a time when the UE receives the Msg4 and the time of the HARQ-ACK feedback | NT,1 + 0.5 |

In Table 1, NT,1 and NT,2 respectively represent N1 and N2 in the calculation formula of the PDSCH processing procedure time of the terminal device with the unrelaxed processing capability.

Table 2

| the minimum time interval between a time when the UE receives the Msg2 and the time when the UE sends a new Msg1 | m * NT,1 + 0.75 |
|---|---|
| the minimum time interval between a time when the UE receives the | m * NT,1 + k * NT,2 + 0.5 |
| Msg2 and the time when the UE sends a Msg3 | |
| the minimum time interval between a time when the UE receives the Msg4 and the time of the HARQ-ACK feedback | m * NT,1 + 0.5 |

In Table 2, NT,1 and NT,2 respectively represent N1 and N2 in the calculation formula of the PDSCH processing procedure time of the terminal device with the relaxed processing capability. Msg1 is the first random access message, Msg2 is the second random access message, Msg3 is the third random access message, Msg4 is the fourth random access message, and 0.5 is the processing time of the Msg2 in the Media Access Control (MAC).

At step 702, a random access message sent by the terminal device is received.

In embodiments of the disclosure, the random access message may be an interaction message between the terminal device and the network device during the random access process, such as the first random access message (Msg1), the second random access message (Msg2), the third random access message (Msg3), the fourth random access message (Msg4), or the like.

Corresponding to the method on the network device side, in sending the random access message, the terminal device implicitly reports the physical layer channel processing capability or the physical layer signal processing capability of the terminal device by sending the resource of the random access message. That is, the terminal device implicitly reports whether the terminal device is a terminal device with the relaxed processing capability or a terminal device with the unrelaxed processing capability, such that the network device may determine the random access message processing time delay of the terminal device. The resource may include at least one of: a bandwidth part, a random access occasion, a preamble sequence in a shared random access occasion, or a PUSCH time/frequency domain resource. The physical layer channel/signal processing capability of the terminal device refers to the processing capability of the physical layer channel of the terminal device or the processing capability of the physical layer signal of the terminal device.

The resource for the terminal device to send the random access message is determined based on the physical layer channel processing capability or the physical layer signal processing capability of the terminal device. There is a correspondence between the resources for sending the random access message and the physical layer channel processing capabilities or the physical layer signal processing capabilities. Based on the resource for sending the random access message by terminal devices, the network device may determine the physical layer channel processing capability or the physical layer signal processing capability of the terminal device.

At step 703, the random access message processing time delay of the terminal device is determined based on the resource corresponding to the random access message.

In embodiments of the disclosure, in response to the resource corresponding to the random access message being a set resource in at least two candidate resource groups, it is determined that the random access message processing time delay of the terminal device is a relaxed time delay, i.e., the random access message processing time delay of the terminal device with the relaxed processing capability. In response to the resource corresponding to the random access message not being a set resource in at least two candidate resource groups, it is determined that the random access message processing time delay of the terminal device is an unrelaxed time delay, i.e., the random access message processing time delay of the terminal device with the unrelaxed processing capability.

At step 704, the transmission(s) of subsequent random access message(s) of the terminal device is scheduled based on the ransom access message processing time delay of the terminal device.

In embodiments of the disclosure, after receiving the random access message, the network device determines the random access message processing time delay of the terminal device based on the resource used for transmitting the random access message, and properly schedule the transmission(s) of the subsequent random access message(s) of the terminal device.

The random access message may be a first random access message (Msg1) and a third random access message (Msg3). In an example, the random access message may be the first random access message (Msg1). Corresponding to the method on the network device side, the terminal devices report the physical layer channel processing capabilities or the physical layer signal processing capabilities of the terminal devices by configuring different resources for the first random access message; and then the "subsequent random access message(s)" involved in the scheduling of the terminal device by the network device refer to the third random access message and the feedback of the fourth random access message. In another example, the random access message may be the third random access message (Msg3). Corresponding to the method on the network device side, the terminal devices report the physical layer channel processing capabilities or the physical layer signal processing capabilities of the terminal devices by configuring different resources for the third random access message; and then the "subsequent random access message(s)" involved in the scheduling of the terminal device by the network device refers to the feedback of the fourth random access message.

With embodiments of the disclosure, the network device sends information to the terminal device. The information is used for indicating candidate resource groups corresponding to at least two types of terminal devices. The network device receives the random access message sent by the terminal device, determines the random access message processing time delay of the terminal device based on the resource corresponding to the random access message, and schedules the transmission of the subsequent random access message(s) of the terminal device based on the random access message processing time delay of the terminal device. In this way, the network device may allocate different resources for the subsequent random access messages for the terminal devices with different processing capabilities, such that the terminal device may normally send the message through the reasonably allocated resource, thereby avoiding the resource rescheduling when the message transmission fails, avoiding the resource waste, and improving the resource utilization.

FIG. 8 is a schematic flowchart illustrating a terminal device scheduling method according to an embodiment of the disclosure. The method is performed by a network device. As illustrated in FIG. 8, the method may include, but is not limited to, the following.

At step 801, the transmission(s) of the subsequent random access message(s) of the terminal device in the serving cell where the network device is in is/are scheduled based on the relaxed random access message processing time delay of the terminal device.

In embodiments of the disclosure, the random access message processing time delay refers to the time required for the terminal device to process the random access message based on its own physical layer channel processing capability or physical layer signal processing capability. The random access message refers to an interaction message between the terminal device and the network device during the random access process, such as the first random access message (Msg1), the third random access message (Msg3) or the like.

In embodiments of the disclosure, the physical layer channel or physical layer signal includes one or more of: a PRACH, a PUSCH, a PDSCH, a PUCCH, a PDCCH, a CSI-RS, an SRS, a PTRS, or a TRS.

In embodiments of the disclosure, different terminal devices correspond to different random access message processing time delays. Different terminal devices means that the physical layer channel processing capabilities of the terminal devices are different or the physical layer signal processing capabilities of the terminal devices are different. The network device needs to schedule different subsequent random access message transmission resources for the terminal devices based on different random access message processing time delays. For example, the random access message processing time delay of a terminal device with the unrelaxed processing capability is relatively small. If a resource with a relatively large time delay is scheduled for the terminal device, after the terminal device completes the processing of the received random access message, after a period of time, the subsequent random access message(s) is/are sent through the resource scheduled by the network device. As another example, the random access message processing time delay of a terminal device with the relaxed processing capability is relatively large. If a resource with a relatively small time delay is scheduled for the terminal device, at the time point when the message needs to be sent through the scheduled resource, the terminal device has not completed the processing of the previously received random access message yet, resulting in waste of resources.

In embodiments of the disclosure, after the network device determines the relaxed random access message processing time delay of the terminal device, as an example, if the previously received random access message is the first random access message, then the terminal device may sequentially determine the possible time point when the terminal device transmits the third random access message and the possible time point when the terminal device transmits the feedback of the fourth random access message based on the random access message processing time delay, and may schedule reasonable time domain resources, to ensure that the terminal device may complete the transmission of the third random access message or the transmission of the feedback of the fourth random access message on the scheduled time domain resources. The terminal device may implicitly report the relaxed physical layer channel processing capability or the relaxed physical layer signal processing capability of the terminal device through the previously sent first random access message, such that the network device may determine the relaxed random access message processing time delay of the terminal device.

In another example, if the previously received random access message is the third random access message, the network device may determine the possible time point when the terminal device transmits the feedback of the fourth random access message based on the random access message processing time delay, and schedule reasonable time-domain resources to ensure that the terminal device may complete the transmission of the feedback of the fourth random access message on the scheduled time-domain resources. The terminal device may implicitly report the relaxed physical layer channel processing capability or the relaxed physical layer signal processing capability of the terminal device through the previously sent third random access message, such that the network device may determine the relaxed random access message processing time delay of the terminal device.

In embodiments of the disclosure, the serving cell may support the access of the terminal device with the relaxed processing capability. When the serving cell supports the access of the terminal device with the relaxed processing capability, the network device may use the methods in the above-mentioned embodiments to determine the random access message processing time delay of the terminal device and schedule the transmission(s) of the subsequent random access message(s) of the terminal device in the serving cell. Or, the network device directly schedules the transmission(s) of the subsequent random access message(s) of the terminal device in the serving cell based on the relaxed random access message processing time delay of the terminal device.

When the serving cell does not support the access of the terminal device with the relaxed processing capability, the network device may schedule the transmission(s) of the subsequent random access message(s) of the terminal device in the serving cell based on the random access message processing time delay of the terminal device with the unrelaxed processing capability.

With embodiments of the disclosure, the network device schedules the transmission(s) of the subsequent random access message(s) of the terminal device in the serving cell where the network device is located based on the relaxed random access message processing time delay of the terminal device. In this way, the resource scheduling processing is performed, such that all terminal devices accessing the serving cell may normally send the message through the scheduled resources, thereby avoiding the resource rescheduling when the message sending fails, avoiding the resource waste, and improving the resource utilization.

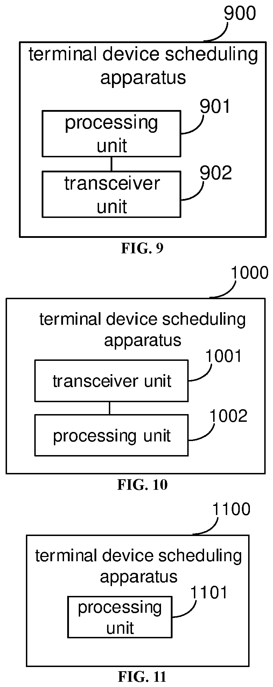

FIG. 9 is a schematic diagram illustrating a terminal device scheduling apparatus according to an embodiment of the disclosure. The apparatus is applied to a terminal device. The apparatus includes a processing unit 901 configured to determine a resource corresponding to a random access message based on a physical layer channel/signal processing capability of the terminal device; and a transceiver unit 902 configured to use the resource to send a random access message to the network device, to enable the network device to determine a random access message processing time delay of the terminal device based on the resource corresponding to the random access message and to schedule transmission(s) of subsequent random access message(s) of the terminal device.

In an embodiment, the physical layer channel/signal includes one or more of: a PRACH, a PUSCH, a PDSCH, a PUCCH, a PDCCH, a CSI-RS, an SRS, a PTRS, or a TRS.

In an implementation, the transceiver unit 902 is further configured to: receive a configuration or indication information sent by the network device. The configuration or indication information is used for configuring or indicating candidate resource groups corresponding to the physical layer channel/signal processing capabilities of at least two types of terminal devices.

In an implementation, the physical layer channel/signal processing capabilities of different terminal devices correspond to different candidate resource groups.

In an implementation, the processing unit 901 is specifically configured to: in response to the terminal device being an evolved reduced capability terminal device or in response to the physical layer channel/signal processing capability of the terminal device being a relaxed processing capability, determine the candidate resource group of the terminal device based on a mapping relationship between the candidate resource groups and the physical layer channel/signal processing capabilities of the terminal devices, and determine the resource for transmitting the random access message from the candidate resource group of the terminal device.

In an implementation, the random access message is a first random access message.

In an embodiment, the random access message is a third random access message, and the mapping relationship between the candidate resource groups and the physical layer channel/signal processing capabilities of the terminal devices is determined based on the first time intervals corresponding to at least two types of physical layer channel/signal processing capabilities. The first time interval is a time interval between a time when the terminal device receives a last symbol of a second random access message and a time when a first symbol of a third random access message is sent.

In an implementation, the configuration or indication information carries the first time intervals corresponding to the at least two types of physical layer channel/signal processing capabilities or carries indexes of the first time intervals corresponding to the at least two types of physical layer channel/signal processing capabilities.

In an implementation, the configuration or indication information carries an association relationship between the first time intervals corresponding to the at least two types of physical layer channel/signal processing capabilities or carries an index of the association relationship.

In an implementation, the configuration or indication information carries a first time interval corresponding to at least one type of physical layer channel/signal processing capability or carries an index of a first time interval corresponding to the at least one type of physical layer channel/signal processing capability. The association relationship between the first time intervals corresponding to the at least two types of physical layer channel/signal processing capabilities is an association relationship preset by a protocol.

In an implementation, the resource includes at least one of: a bandwidth part, a random access occasion, a preamble sequence in a shared random access occasion, or a PUSCH time/frequency domain resource.

FIG. 10 is a schematic flowchart illustrating another terminal device scheduling apparatus according to an embodiment of the disclosure. The apparatus is applied to a network device. The apparatus 1000 includes a transceiver unit 1001 configured to receive a random access message sent by a terminal device and a processing unit 1002 configured to determine a random access message processing time delay of the terminal device based on the resource corresponding to the random access message. The processing unit 1002 is further configured to schedule transmission(s) of subsequent random access message(s) of the terminal device based on the random access message processing time delay of the terminal device.

In an implementation, the transceiver unit 1001 is further configured to send configuration or indication information to the terminal device. The configuration or indication information is used for configuring or indicating candidate resource groups corresponding to the physical layer channel/signal processing capabilities of the at least two types of terminal devices.

In an implementation, the physical layer channel/signal includes one or more of: a PRACH, a PUSCH, a PDSCH, a PUCCH, a PDCCH, a CSI-RS, an SRS, a PTRS, or a TRS.

In an implementation, the physical layer channel/signal processing capabilities of different terminal devices correspond to different candidate resource groups.

In an implementation, the processing unit is specifically configured to determine that the random access message processing time delay of the terminal device is a relaxed time delay in response to the resource corresponding to the random access message is a set resource in at least two candidate resource groups.

In an implementation, the random access message is a first random access message.

In an implementation, the random access message is a third random access message, and the mapping relationship between the candidate resource groups and the physical layer channel/signal processing capabilities of the terminal devices is determined based on the first time intervals corresponding to the at least two types of physical layer channel/signal processing capabilities. The first time interval is a time interval between a time when a last symbol of the second random access message is received by the terminal device and a time when a first symbol of the third random access message is sent.

In an implementation, the configuration or indication information carries the first time intervals corresponding to the at least two types of physical layer channel/signal processing capabilities or carries indexes of the first time intervals corresponding to the at least two types of physical layer channel/signal processing capabilities.

In an implementation, the configuration or indication information carries an association relationship between the first time intervals corresponding to the at least two types of physical layer channel/signal processing capabilities or carries an index of the association relationship.

In an implementation, the configuration or indication information carries a first time interval corresponding to at least one type of physical layer channel/signal processing capability, or carries an index of a first time interval corresponding to the at least one type of physical layer channel/signal processing capability. The association relationship between the first time intervals corresponding to the at least two types of physical layer channel/signal processing capabilities is a preset association relationship.

In an implementation, the resource includes at least one of a bandwidth part, a random access occasion, a preamble sequence in a shared random access occasion, or a PUSCH time/frequency domain resource.

FIG. 11 is a schematic diagram illustrating another terminal device scheduling apparatus according to an embodiment of the disclosure. The apparatus is applied to a network device. The terminal device scheduling apparatus 1100 includes a processing unit 1101 configured to schedule transmission(s) of subsequent random access message(s) of the terminal device in a serving cell where the network device is located based on a relaxed random access message processing time delay of the terminal device.

In an implementation, the serving cell supports an access of a reduced capability terminal device.

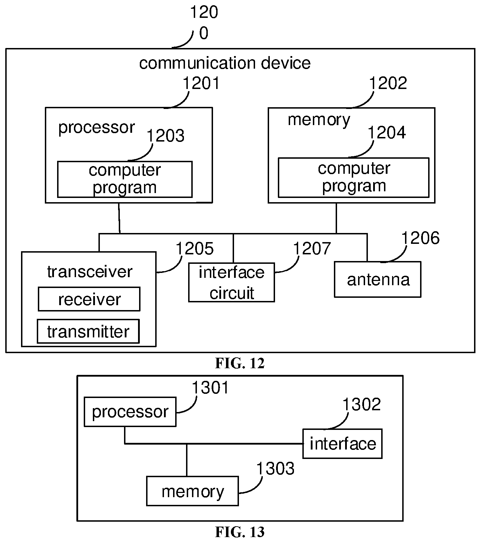

FIG. 12 is a schematic structural diagram illustrating a communication device 1200 according to an embodiment of the disclosure. The communication device 1200 may be a network device or a terminal device. Or, the communication device 1200 may be a chip, a chip system, or a processor that supports the network device to implement the above methods. Or, the communication device 1200 may be a chip, a chip system, or a processor that supports the terminal device to implement the above methods. The device may be used to implement the methods described in above method embodiments, and reference may be made to the descriptions in above method embodiments for details.

The communication device 1200 may include one or more processors 1201. The processor 1201 may be a general-purpose processor or a special-purpose processor. For example, the processor may be a baseband processor or a central processing unit. The baseband processor may be used to process communication protocols and communication data, and the central processing unit may be used to control the communication device (such as the base station, the baseband chip, the terminal equipment, the terminal equipment chip, the DU, the CU, or others), execute a computer program, and to process data of the computer program.

In some embodiments, the communication device 1200 may further include one or more memories 1202, on which a computer program 1204 may be stored. The processor 1201 executes the computer program 1204, such that the communication device 1200 performs the methods described in foregoing method embodiments. Or, the memory 1202 may have data stored thereon. The communication device 1200 and the memory 1202 may be set separately or integrated together.

In some embodiments, the communication device 1200 may further include a transceiver 1205 and an antenna 1206. The transceiver 1205 may be called a transceiver unit, a transceiver module, or a transceiver circuit. The transceiver 1205 is used to implement a transceiver function. The transceiver 1205 may include a receiver and a transmitter. The receiver may be called receiver unit or receiving circuit for realizing a receiving function. The transmitter may be called transmitter unit or a sending circuit for realizing a sending function.

In some embodiments, the communication device 1200 may further include one or more interface circuits 1207. The interface circuit 1207 is used to receive code instructions and transmit the code instructions to the processor 1201. The processor 1201 runs the code instructions to enable the communication device 1200 to perform the methods described in foregoing method embodiments.

When the communication device 1200 is a terminal device, the processor 1201 is configured to perform the step S201 in FIG. 2, perform the step S302 in FIG. 3, perform the step S402 in FIG. 4, and perform the step S502 in FIG. 5, and the transceiver 1205 is used to perform the step S202 in FIG. 2, perform the step S301 and the step S303 in FIG. 3, perform the step S401 and the step S403 in FIG. 4, and perform the step S501 and the step S503 in FIG. 5.

When the communication device 1200 is a network device, the transceiver 1205 is used to perform the step S601 in FIG. 6 and perform the step S701 and the step S702 in FIG. 7, and the processor 1201 is used to perform the step S602 and the step S603 in FIG. 5, perform the step S703 and the step S704 in FIG. 7, and perform the step S801 in FIG. 8.

In an implementation, the processor 1201 may include a transceiver for implementing receiving and sending functions. For example, the transceiver may be a transceiver circuit, an interface, or an interface circuit. The transceiver circuit, the interface or the interface circuit for realizing the receiving and sending functions may be separated or integrated together. The above-mentioned transceiver circuit, interface or interface circuit may be used for reading and writing code/data, or the above-mentioned transceiver circuit, interface or interface circuit may be used for signal transmission or transfer.

In an implementation, the processor 1201 may store a computer program 1203. The computer program 1203 runs on the processor 1201 to enable the communication device 1200 to perform the methods described in foregoing method embodiments. The computer program 1203 may be solidified in the processor 1201, and in this case, the processor 1201 may be implemented by hardware.

In an implementation, the communication device 1200 may include a circuit. The circuit may implement the sending, receiving or communicating functions in foregoing method embodiments. The processor and the transceiver described in the disclosure may be implemented on integrated circuits (ICs), analog ICs, radio frequency integrated circuits (RFICs), mixed-signal ICs, application specific integrated circuits (ASICs), printed circuit boards (PCB), and electronic equipment. The processor and transceiver may also be fabricated using various IC process technologies such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe), or gallium arsenide (GaAs).

The communication device described in above embodiments may be a network device or a terminal device, but the scope of the communication device described in the disclosure is not limited thereto and the structure of the communication device may not be limited by FIG. 12. The communication device may be a stand-alone device or may be part of a larger device. For example the communication device may be:

(1) a stand-alone IC, a chip, a chip system or a subsystem;

(2) a set of one or more ICs, for example, the set of ICs may also include storage components for storing data and computer programs;

(3) an ASIC, such as a Modem;

(4) a module that is embedded in other devices;

(5) a receiver, a terminal device, an intelligent terminal device, a cellular phone, a wireless device, a handset, a mobile unit, a vehicle device, a network device, a cloud device, an artificial intelligence device, or the like;

(6) others.

When the communication device is a chip or a chip system, reference may be made to the schematic structural diagram of the chip illustrated in FIG. 13. The chip illustrated in FIG. 13 includes a processor 1301 and an interface 1302. There may be one or more processors 1301 and there may be one or more interfaces 1302.

In some embodiments, the chip further includes a memory 1303 for storing necessary computer programs and data.

Those skilled in the art may understand that various illustrative logical blocks and steps listed in embodiments of the disclosure may be implemented by electronic hardware, computer software, or a combination of both. Whether these functions are implemented by hardware or software depends on the specific application and overall system design requirements. Those skilled in the art may use various methods to implement the described functions for each specific application, but such implementation should not be understood as exceeding the protection scope of embodiments of the disclosure.

The disclosure also provides a readable storage medium on which instructions are stored. When the instructions are executed by a computer, functions of any one of above method embodiments are realized.

The disclosure also provides a computer program product. When the computer program product is executed by a computer, functions of any one of above method embodiments are realized.

All or part of above embodiments may be implemented by software, hardware, firmware or any combination thereof. When implemented using software, the above embodiments may be implemented in whole or in part in the form of computer program product. The computer program product includes one or more computer programs. When the computer program is loaded and executed on the computer, all or part of the processes or functions according to embodiments of the disclosure will be generated. The computer may be a general purpose computer, a special purpose computer, a computer network, or other programmable devices. The computer program may be stored in or transmitted from one computer-readable storage medium to another computer-readable storage medium. For example, the computer program may be downloaded from a website, a computer, a server or a data center to another website site, a computer, a server or a data center by wired (such as coaxial cable, optical fiber or digital subscriber line (DSL)) or wireless (such as infrared, wireless or microwave). The computer-readable storage medium may be any available medium that may be accessed by a computer or a data storage device, such as a server or a data center, integrated with one or more available media. The available medium may be a magnetic medium (for example, a floppy disk, a hard disk, a magnetic tape), an optical medium (for example, a high-density digital video disc (DVD)), or a semiconductor medium (for example, a solid state disk (SSD)).

Those skilled in the art may understand that, the first, second and other numbers involved in the disclosure are only for convenience of description and are not used to limit the scope of embodiments of the disclosure or indicate the sequence.

The phrase "at least one" in the disclosure may also be described as "one or more". The term "multiple" may be two, three, four or more, which is not limited in the disclosure. In embodiments of the disclosure, a technical feature may be distinguished by "first", "second", "third", "A", "B", "C" and "D", etc. The technical features described in the "first", "second", "third", "A", "B", "C" and "D" have no sequence or order of magnitude among the technical features described.

The correspondences shown in the tables in the application may be configured or predefined. Values of the information in each table are just examples and may be configured as other values, which are not limited in the disclosure. When configuring the correspondences between the information and between parameters, it is not necessarily required to configure all the correspondences shown in the tables. For example, in the tables of the disclosure, the correspondences shown in some rows may not be configured. As another example, appropriate adjustments may be made based on the above tables, for example, the tables may be split or merged. The names of the parameters shown in the titles of the above tables may also adopt other names understandable by the communication device, and the values or representations of the parameters may also be other values or representations understandable by the communication device. When the above tables are implemented, other data structures may also be used. For example, arrays, queues, containers, stacks, linear tables, pointers, linked lists, trees, graphs, structures, classes, heaps, or hash tables may be used.

The term "predefined" in the disclosure may be understood as defined, predefined, stored pre-stored, pre-negotiated, pre-configured, cured, or pre-fired.

Those skilled in the art may appreciate that the units and algorithm steps of the examples described in connection with embodiments of the disclosure herein may be implemented by electronic hardware, or a combination of computer software and electronic hardware. Whether these functions are executed by hardware or software depends on the specific application and design constraints of the technical solution. The skilled person in the art may use different methods to implement the described functions for each specific application, but such implementation should not be regarded as exceeding the scope of the disclosure.

Those skilled in the art may clearly understand that for the convenience and brevity of the description, the specific working process of the above-described system, device and unit may refer to the corresponding process in foregoing method embodiments, which will not be repeated here.

The above is only a specific implementation of the disclosure, but the scope of protection of the disclosure is not limited thereto. Those skilled in the art who is familiar with the technical field may easily think of changes or substitutions within the technical scope of the disclosure, which are covered within the protection scope of the disclosure. Therefore, the protection scope of the disclosure should be determined by the protection scope of the claims.

**Claims**

1. A terminal device scheduling method, performed by a terminal device, comprising:

   determining a resource corresponding to a random access message based on a physical layer channel/signal processing capability of the terminal device; and
   sending the random access message through the resource to a network device, to enable the network device to determine a random access message processing time delay of the terminal device based on the resource corresponding to the random access message and to schedule a transmission of a subsequent random access message of the terminal device.

2. The method of claim 1, wherein a physical layer channel/signal comprises one or more of:
   a Physical Random Access Channel (PRACH), a Physical Uplink Shared Channel (PUSCH), a Physical Downlink Shared Channel (PDSCH), a Physical Uplink Control Channel (PUCCH), a Physical Downlink Control Channel (PDCCH), a Channel State Information Reference Signal (CSI-RS), a Sounding Reference Signal (SRS), a Phase Tracking Reference Signal (PTRS), or a Tracking Reference Signal (TRS).

3. The method of claim 1, further comprising:

   receiving configuration or indication information sent by the network device;
   wherein the configuration or indication information is used for configuring or indicating candidate resource groups corresponding to at least two types of physical layer channel/signal processing capabilities of terminal devices.

4. The method of claim 3, wherein the physical layer channel/signal processing capabilities of different terminal devices correspond to different candidate resource groups.

5. The method of claim 3, wherein determining the resource corresponding to the random access message based on the physical layer channel/signal processing capability of the terminal device comprises:

   in response to the terminal device being an evolved reduced capability terminal device or in response to the physical layer channel/signal processing capability of the terminal device being a relaxed processing capability, determining a candidate resource group of the terminal device based on a mapping relationship between candidate resource groups and the physical layer channel/signal processing capabilities of the terminal devices; and
   determining the resource for transmitting the random access message from the candidate resource group of the terminal device.

6. The method of claim 5, wherein the random access message is a first random access message.

7. The method of claim 5, wherein the random access message is a third random access message, and the mapping relationship between the candidate resource groups and the physical layer channel/signal processing capabilities of the terminal devices is determined based on first time intervals corresponding to at least two types of physical layer channel/signal processing capabilities, the first time interval being a time interval between a time when the terminal device receives a last symbol of a second random access message and a time when a first symbol of the third random access message is sent.

8. The method of claim 7, wherein the configuration or indication information carries the first time intervals corresponding to the at least two types of physical layer channel/signal processing capabilities or carries indexes of the first time intervals corresponding to the at least two types of physical layer channel/signal processing capabilities.

9. The method of claim 7, wherein the configuration or indication information carries an association relationship between the first time intervals corresponding to the at least two types of physical layer channel/signal processing capabilities or carries an index of the association relationship.

10. The method of claim 7, wherein the configuration or indication information carries a first time interval corresponding to at least one type of physical layer channel/signal processing capability or carries an index of the first time interval corresponding to the at least one type of physical layer channel/signal processing capability; and
wherein an association relationship between first time intervals corresponding to at least two types of physical layer channel/signal processing capabilities is preset by a protocol.

11. The method of claim 6, wherein the resource comprises at least one of: a bandwidth part, a random access occasion, a preamble sequence in a shared random access occasion, or a Physical Uplink Shared Channel (PUSCH) time/-frequency domain resource.

12. A terminal device scheduling method, performed by a network device, comprising:

receiving a random access message sent by a terminal device;
determining a random access message processing time delay of the terminal device based on a resource corresponding to the random access message; and
scheduling a transmission of a subsequent random access message of the terminal device based on the random access message processing time delay of the terminal device.

13. The method of claim 12, further comprising:

sending configuration or indication information to the terminal device;
wherein the configuration or indication information is used for configuring or indicating candidate resource groups corresponding to at least two types of physical layer channel/signal processing capabilities of terminal devices.

14. The method of claim 13, wherein a physical layer channel/signal comprises one or more of:
a Physical Random Access Channel (PRACH), a Physical Uplink Shared Channel (PUSCH), a Physical Downlink Shared Channel (PDSCH), a Physical Uplink Control Channel (PUCCH), a Physical Downlink Control Channel (PDCCH), a Channel State Information Reference Signal (CSI-RS), a Sounding Reference Signal (SRS), a Phase Tracking Reference Signal (PTRS), or a Tracking Reference Signal (TRS).

15. The method of claim 13, wherein the physical layer channel/signal processing capabilities of different terminal devices correspond to different candidate resource groups.

16. The method of claim 14, wherein determining the random access message processing time delay of the terminal device based on the resource corresponding to the random access message comprises:
in response to the resource corresponding to the random access message being a set resource in at least two candidate resource groups, determining that the random access message processing time delay of the terminal device is a relaxed delay.

17. The method of claim 16, wherein the random access message is a first random access message.

18. The method of claim 16, wherein the random access message is a third random access message, and a mapping relationship between candidate resource groups and the physical layer channel/signal processing capabilities of the terminal devices is determined based on first time intervals corresponding to at least two types of physical layer channel/signal processing capabilities, the first time interval being a time interval between a time when the terminal device receives a last symbol of a second random access message and a time when a first symbol of the third random access message is sent.

19. The method of claim 18, wherein the configuration or indication information carries the first time intervals corresponding to the at least two types of physical layer channel/signal processing capabilities or carries indexes of the first time intervals corresponding to the at least two types of physical layer channel/signal processing capabilities.

20. The method of claim 18, wherein the configuration or indication information carries an association relationship between first time intervals corresponding to the at least two types of physical layer channel/signal processing capabilities or carries an index of the association relationship.

21. The method of claim 18, wherein the configuration or indication information carries a first time interval corresponding to at least one type of physical layer channel/signal processing capability or carries an index of the first time interval corresponding to the at least one type of physical layer channel/signal processing capability; and
wherein an association relationship between the first time intervals corresponding to the at least two types of physical layer channel/signal processing capabilities is a preset association relationship.

22. The method of claim 17, wherein the resource comprises at least one of a bandwidth part, a random access occasion, a preamble sequence in a shared random access occasion, or a Physical Uplink Shared Channel (PUSCH) time/frequency domain resource.

23. A terminal device scheduling method, performed by a network device, comprising:
scheduling a transmission of a subsequent random access message of a terminal device in a serving cell where the network device is located based on a relaxed random access message processing time delay of the terminal device.

24. The method of claim 23, wherein the serving cell supports an access of a reduced capability terminal device.

25. A terminal device scheduling apparatus, applied to a terminal device, comprising:

a processing unit, configured to determine a resource corresponding to a random access message based on a physical layer channel/signal processing capability of the terminal device; and
a transceiver unit, configured to send the random access message through the resource to a network device, to enable the network device to determine a random access message processing time delay of the terminal device based on the resource corresponding to the random access message and to schedule a transmission of a subsequent random access message of the terminal device.

26. The apparatus of claim 25, wherein a physical layer channel/signal comprises one or more of:
a Physical Random Access Channel (PRACH), a Physical Uplink Shared Channel (PUSCH), a Physical Downlink Shared Channel (PDSCH), a Physical Uplink Control Channel (PUCCH), a Physical Downlink Control Channel (PDCCH), a Channel State Information Reference Signal (CSI-RS), a Sounding Reference Signal (SRS), a Phase Tracking Reference Signal (PTRS), or a Tracking Reference Signal (TRS).

27. The apparatus of claim 25, wherein the transceiver unit is further configured to:

receive configuration or indication information sent by the network device;
wherein the configuration or indication information is used for configuring or indicating candidate resource groups corresponding to at least two types of physical layer channel/signal processing capabilities of terminal devices.

28. The apparatus of claim 27, wherein the physical layer channel/signal processing capabilities of different terminal devices correspond to different candidate resource groups.

29. The apparatus of claim 27, wherein the processing unit is configured to:

in response to the terminal device being an evolved reduced capability terminal device or in response to the physical layer channel/signal processing capability of the terminal device being a relaxed processing capability, determine a candidate resource group of the terminal device based on a mapping relationship between candidate resource groups and the physical layer channel/signal processing capabilities of the terminal devices; and
determine the resource for transmitting the random access message from the candidate resource group.

30. The apparatus of claim 29, wherein the random access message is a first random access message.

31. The apparatus of claim 29, wherein the random access message is a third random access message, and the mapping relationship between the candidate resource groups and the physical layer channel/signal processing capabilities of the terminal devices is determined based on first time intervals corresponding to at least two types of physical layer channel/signal processing capabilities, the first time interval being a time interval between a time when the terminal device receives a last symbol of a second random access message and a time when a first symbol of the third random access message is sent.

32. The apparatus of claim 31, wherein the configuration or indication information carries the first time intervals corresponding to the at least two types of physical layer channel/signal processing capabilities or carries indexes of the first time intervals corresponding to the at least two types of physical layer channel/signal processing capabilities.

33. The apparatus of claim 31, wherein the configuration or indication information carries an association relationship between the first time intervals corresponding to the at least two types of physical layer channel/signal processing capabilities or carries an index of association relationship.

34. The apparatus of claim 31, wherein the configuration or indication information carries a first time interval corresponding to at least one type of physical layer channel/signal processing capability or carries an index of the first time interval corresponding to at least one type of physical layer channel/signal processing capability; and
wherein the association relationship between the first time intervals corresponding to the at least two types of physical layer channel/signal processing capabilities is an association relationship preset by a protocol.

35. The apparatus of claim 30, wherein the resource comprises at least one of a bandwidth part, a random access occasion, a preamble sequence in a shared random access occasion, or a Physical Uplink Shared Channel (PUSCH) time/frequency domain resource.

36. A terminal device scheduling apparatus, applied to a network device, comprising:

   a transceiver unit, configured to receive a random access message sent by a terminal device;
   a processing unit, configured to determine a random access message processing time delay of the terminal device based on a resource corresponding to the random access message;
   wherein the processing unit is further configured to schedule a transmission of a subsequent random access message of the terminal device based on the random access message processing time delay of the terminal device.

37. The apparatus of claim 36, wherein the transceiver unit is further configured to:

   send configuration or indication information to the terminal device;
   wherein the configuration or indication information is used for configuring or indicating candidate resource groups corresponding to at least two types of physical layer channel/signal processing capabilities of terminal devices.

38. The apparatus of claim 37, wherein a physical layer channel/signal comprises one or more of:
a Physical Random Access Channel (PRACH), a Physical Uplink Shared Channel (PUSCH), a Physical Downlink Shared Channel (PDSCH), a Physical Uplink Control Channel (PUCCH), a Physical Downlink Control Channel (PDCCH), a Channel State Information Reference Signal (CSI-RS), a Sounding Reference Signal (SRS), a Phase Tracking Reference Signal (PTRS), or a Tracking Reference Signal (TRS).

39. The apparatus of claim 37, wherein physical layer channel/signal processing capabilities of different terminal devices correspond to different candidate resource groups.

40. The apparatus of claim 38, wherein the processing unit is configured to:
in response to the resource corresponding to the random access message being a set resource in at least two candidate resource groups, determine that the random access message processing time delay of the terminal device is a relaxed delay.

41. The apparatus of claim 40, wherein the random access message is a first random access message.

42. The apparatus of claim 40, wherein the random access message is a third random access message, and a mapping relationship between candidate resource groups and physical layer channel/signal processing capabilities of terminal devices is determined based on first time intervals corresponding to the at least two types of physical layer channel/signal processing capabilities, the first time interval being a time interval between a time when the terminal device receives a last symbol of a second random access message and a time when a first symbol of the third random access message is sent.

43. The apparatus of claim 42, wherein the configuration or indication information carries first time intervals corresponding to the at least two types of physical layer channel/signal processing capabilities or carries indexes of the first time intervals corresponding to the at least two types of physical layer channel/signal processing capabilities.

44. The apparatus of claim 42, wherein the configuration or indication information carries an association relationship between first time intervals corresponding to at least two types of physical layer channel/signal processing capabilities or carries an index of the association relationship.

45. The apparatus of claim 42, wherein the configuration or indication information carries a first time interval corresponding to at least one type of physical layer channel/signal processing capability or carries an index of the first time interval corresponding to the at least one type of physical layer channel/signal processing capability; and
wherein the association relationship between the first time intervals corresponding to the at least two types of physical layer channel/signal processing capabilities is a preset association relationship.

46. The apparatus of claim 41, wherein the resource comprises at least one of: a bandwidth part, a random access occasion, a preamble sequence in a shared random access occasion, or a Physical Uplink Shared Channel (PUSCH) time/frequency domain resource.

47. A terminal device scheduling apparatus, applied to a network device, comprising:
a processing unit, configured to schedule a transmission of a subsequent random access message of a terminal device in a serving cell where the network device is located based on a relaxed random access message processing time delay of the terminal device.

48. The apparatus of claim 47, wherein the serving cell supports an access of a reduced capability terminal device.

49. A communication device, comprising a processor and a memory, wherein the memory has a computer program stored therein and when the processor executes the computer program stored in the memory, the device is caused to perform the method of any one of claims 1 to 11.

50. A communication device, comprising a processor and a memory, wherein the memory has a computer program stored therein and when the processor executes the computer program stored in the memory, the device is caused to perform the method of any one of claims 12 to 22 or the method of any one of claim 23 or 24.

51. A communication device, comprising: a processor and an interface circuit;

wherein the interface circuit is configured to receive code instructions and transmit the code instructions to the processor; and
the processor is configured to run the code instructions to perform the method of any one of claims 1 to 11.

52. A communication device, comprising: a processor and an interface circuit;

wherein the interface circuit is configured to receive code instructions and transmit the code instructions to the processor; and
the processor is configured to run the code instructions to perform the method of any one of claims 12 to 22 or the method of claim 23 or 24.

53. A computer-readable storage medium, having instructions stored thereon, wherein when the instructions are executed, the method of any one of claims 1 to 11 is performed.

54. A computer-readable storage medium, having instructions stored thereon, wherein when the instructions are executed, the method of any one of claims 12 to 22 or the method of claim 23 or 24 is performed.

network device
101

terminal device
102

FIG. 1

determine a resource used for sending a random access message based on a physical layer channel/signal processing capability of the terminal device — S201

use the resource to send the random access message to the network device, the random access message sent through the resource is used for instructing the network device to determine the random access message processing time delay for the terminal device based on the resource corresponding to the random access message, the random access message processing time delay for the terminal device is used for scheduling a transmission of a subsequent random access message of the terminal device — S202

FIG. 2

receive information sent by a network device, candidate resource groups corresponding to at least two types of terminal devices are determined by the terminal device based on the information — S301

determine a candidate resource group, corresponding to the terminal device, for sending a random access message and determine a resource in the candidate resource group as a resource corresponding to the random access message — S302

use the resource to send a random access message to the network device, the random access message sent through the resource is used for instructing the network device to determine the random access message processing time delay for the terminal device based on the resource corresponding to the random access message, and the random access message processing time delay for the terminal device is used for scheduling the transmission of the subsequent random access message of the terminal device — S303

FIG. 3

receive information sent by a network device, in which based to the information, the terminal device determines candidate resource groups corresponding to at least two types of terminal devices
S401

determine a candidate resource group, corresponding to the terminal device, for sending the first random access message and determine a resource in the candidate resource group as the resource corresponding to the first random access message
S402

use the resource to send a first random access message to the network device, in which the first random access message sent through the resource is used for instructing the network device to determine the random access message processing time delay of the terminal device based on the resource corresponding to the first random access message and to schedule the transmission of the subsequent random access message of the terminal device
S403

**FIG. 4**

the terminal device determines a first time interval corresponding to the physical layer channel processing capability of the terminal device or the physical layer signal processing capability of the terminal device, in which the first time interval is a time interval between a time when the last symbol of the second random access message is received by the terminal device and a time when a first symbol of the third random access message is sent
S501

determine a candidate resource group for sending the third random access message based on the terminal device type, and use a resource in the candidate resource group as the resource corresponding to the third random access message
S502

use the resource to send the third random access message to the network device, in which the third random access message sent through the resources is used for instructing the network device to determine the random access message processing time delay for the terminal device based on the resource corresponding to the third random access message and to schedule the transmission of the subsequent random access message of the terminal device
S503

**FIG. 5**

| receive a random access message sent by a terminal device | S601 |

| determine the random access message processing time delay of the terminal device based on the resource corresponding to the random access message | S602 |

| schedule the transmission of a subsequent random access message of the terminal device based on the random access message processing time delay of the terminal device | S603 |

**FIG. 6**

| send information to the terminal device, in which the information is used for indicating candidate resource groups corresponding to at least two types of terminal devices | S701 |

| receive a random access message sent by the terminal device | S702 |

| determine the random access message processing time delay of the terminal device based on the resource corresponding to the random access message | S703 |

| schedule the transmission of a subsequent random access message of the terminal device based on the ransom access message processing time delay of the terminal device | S704 |

**FIG. 7**

| schedule the transmission of the subsequent random access message of the terminal device in the serving cell where the network device is located based on the relaxed random access message processing time delay of the terminal device | S801 |

**FIG. 8**

900

terminal device scheduling
apparatus

processing
unit                    901

transceiver
unit                    902

FIG. 9

1000

terminal device scheduling
apparatus

transceiver unit        1001

processing unit         1002

FIG. 10

1100

terminal device scheduling
apparatus              1101

processing
unit

FIG. 11

**FIG. 12**

**FIG. 13**

## INTERNATIONAL SEARCH REPORT

| International application No. |
|---|
| **PCT/CN2022/076106** |

**A.    CLASSIFICATION OF SUBJECT MATTER**

H04W 74/08(2009.01)i

According to International Patent Classification (IPC) or to both national classification and IPC

**B.    FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNTXT; VEN; ENTXT; 3GPP; CNKI: 降低, 简化, 放松, 减小, 受限, 终端, 处理能力, 随机接入, 延时, 时延, 间隔时间, 处理时间, 调度, 资源, redcap, UE, process+, msg+, random 2d access+, delay+, time, schedul+, control+, dispatch+, PRACH, PUSCH, PDSCH, PUCCH, PDCCH, CSI-RS, SRS, PTRS, TRS

**C.    DOCUMENTS CONSIDERED TO BE RELEVANT**

| Category* | Citation of document, with indication, where appropriate, of the relevant passages | Relevant to claim No. |
|---|---|---|
| X | CN 111901835 A (ZTE CORP.) 06 November 2020 (2020-11-06)<br>    description, paragraphs 2-23 and 45-100 | 1-6, 11-17, 22-30, 35-41, 46-54 |
| X | WO 2021158162 A1 (TELEFONAKTIEBOLAGET LM ERICSSON (PUBL)) 12 August 2021 (2021-08-12)<br>    description, pages 10-28 | 1-6, 11-17, 22-30, 35-41, 46-54 |
| X | Moderator Intel Corporation. "3GPP TSG RAN WG1 Meeting #102-E, e-Meeting, August 17th–28th, 2020"<br>*Summary on [102-e-NR-RedCap-05]*, 20 August 2020 (2020-08-20),<br>    section 3 | 1-6, 11-17, 22-30, 35-41, 46-54 |
| A | CN 113966008 A (RESEARCH INSTITUTE OF CHINA MOBILE COMMUNICATIONS CORP. et al.) 21 January 2022 (2022-01-21)<br>    entire document | 1-54 |
| A | WO 2021141527 A1 (TELEFONAKTIEBOLAGET LM ERICSSON (PUBL)) 15 July 2021 (2021-07-15)<br>    entire document | 1-54 |

☑ Further documents are listed in the continuation of Box C.          ☑ See patent family annex.

| | |
|---|---|
| \*      Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **06 November 2022** | **17 November 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/076106**

**C.    DOCUMENTS CONSIDERED TO BE RELEVANT**

| Category* | Citation of document, with indication, where appropriate, of the relevant passages | Relevant to claim No. |
|---|---|---|
| A | CN 111278121 A (VIVO COMMUNICATION TECHNOLOGY CO., LTD.) 12 June 2020 (2020-06-12)<br>    entire document | 1-54 |
| A | CN 113574955 A (GUANGDONG OPPO MOBILE COMMUNICATIONS CO., LTD.) 29 October 2021 (2021-10-29)<br>    entire document | 1-54 |
| A | ERICSSON. "3GPP TSG RAN Meeting #89e, Electronic Meeting, September 14 - 18, 2020, RP-202068"<br>*Moderator's summary for email discussion [89E][24][R17_REDCAP_scope],*<br>18 September 2020 (2020-09-18),<br>    entire document | 1-54 |

Form PCT/ISA/210 (second sheet) (January 2015)

# EP 4 478 823 A1

**INTERNATIONAL SEARCH REPORT**
Information on patent family members

International application No.

**PCT/CN2022/076106**

| Patent document cited in search report | | | Publication date (day/month/year) | Patent family member(s) | | | Publication date (day/month/year) |
|---|---|---|---|---|---|---|---|
| CN | 111901835 | A | 06 November 2020 | None | | | |
| WO | 2021158162 | A1 | 12 August 2021 | None | | | |
| CN | 113966008 | A | 21 January 2022 | None | | | |
| WO | 2021141527 | A1 | 15 July 2021 | None | | | |
| CN | 111278121 | A | 12 June 2020 | JP | 2022518537 | A | 15 March 2022 |
| | | | | WO | 2020151706 | A1 | 30 July 2020 |
| | | | | AU | 2020210990 | A1 | 16 September 2021 |
| | | | | CA | 3127702 | A1 | 30 July 2020 |
| | | | | SG | 11202108145 P | A | 30 August 2021 |
| | | | | KR | 20210114474 | A | 23 September 2021 |
| | | | | EP | 3917240 | A1 | 01 December 2021 |
| | | | | US | 2021352742 | A1 | 11 November 2021 |
| CN | 113574955 | A | 29 October 2021 | None | | | |

Form PCT/ISA/210 (patent family annex) (January 2015)